# EUROPEAN PATENT APPLICATION

(11) **EP 4 645 484 A1**
(43) Date of publication of application: **05.11.2025**
(21) Application number: 23916824.8
(22) Date of filing: 20.01.2023
(51) Int. Cl.: H01M 10/04

(54) **WINDING DEVICE, WINDING SYSTEM AND WINDING METHOD**

(71) Applicant: Contemporary Amperex Technology Co., Limited, Ningde, Fujian 352100 (CN)
(72) Inventor: ZHANG, Wei, Ningde, Fujian 352100 (CN); WU, Xiang, Ningde, Fujian 352100 (CN); LIU, Bingliang, Ningde, Fujian 352100 (CN); TANG, Linglong, Ningde, Fujian 352100 (CN); PAN, Feng, Ningde, Fujian 352100 (CN); ZHANG, Xiaowei, Ningde, Fujian 352100 (CN); WEN, Yuqian, Ningde, Fujian 352100 (CN)
(74) Representative: Ziebig Hengelhaupt Intellectual Property Attorneys Patentanwaltskanzlei PartGmbB
(86) International application number: PCT/CN2023/073348
(87) International publication number: WO 2024/152346

(57) **Abstract**

The present application discloses a winding device (10), a winding system, and a winding method. The winding device (10) includes a winding needle (101) and a first push rod (102). A first needle body (1011) and a second needle body (1012) form a first hole (1015) at a first end (1013), at least part of the first hole (1015) is a first adjusting hole section (10151), and a radial dimension of the first adjusting hole section (10151) is gradually reduced in a direction close to a second end (1014). The first push rod (102) is inserted into the first hole (1015) and capable of reciprocating in an axial direction of the winding needle (101), and the first push rod (102) has a first adjusting section (1021) matched with the first adjusting hole section (10151). The winding device (10) can adjust a circumference of the winding needle (101) to reduce a tab misalignment amount.

## Description

### TECHNICAL FIELD

The present application relates to the technical field of battery production, and in particular, to a winding device, a winding system, and a winding method.

### BACKGROUND

In the battery production process, the winding device is a device that winds a positive electrode plate, a separator, and a negative electrode plate together to form an electrode assembly. However, during the winding operation of the winding device, as the number of winding turns increases, factors such as changes in the thickness of the positive electrode plate, changes in the thickness of the negative electrode plate, and changes in the thickness of the separator can easily lead to a tap misalignment phenomenon occurring in the formed electrode assembly, resulting in a high defective rate and scrap rate of the formed electrode assembly.

### SUMMARY OF THE INVENTION

Embodiments of the present application provide a winding device, a winding system, and a winding method, which aim to solve the problem that an electrode assembly formed by an existing winding device is prone to a tab misalignment phenomenon, resulting in a high defective rate and scrap rate of the formed electrode assembly.

In the embodiments of the present application, the technical solutions as follows are used.

In a first aspect, a winding device is provided, where the winding device includes:
a winding needle, including a first needle body and a second needle body which are parallel to each other and have an adjustable spacing therebetween, where the winding needle has a first end and a second end opposite to each other, the first needle body and the second needle body jointly form a first hole at the first end, at least part of the first hole is a first adjusting hole section, and a radial dimension of the first adjusting hole section is gradually reduced in a direction close to the second end; and
a first push rod, inserted into the first hole and capable of reciprocating in an axial direction of the winding needle, where the first push rod has a first adjusting section matched with the first adjusting hole section.

When it is found that the tab misalignment phenomenon occurs in a previous electrode assembly wound by the winding device, the winding device provided in the embodiment of the present application can control, according to the tab misalignment amount of the previous electrode assembly, the first push rod to be inserted into or pulled out of the first hole before starting to wind a next electrode assembly, and control the first push rod to reciprocate in the axial direction of the winding needle to adjust a matching position of the first adjusting section of the first push rod and the first adjusting hole section of the first hole, so that an abutting pushing effect of the first adjusting section on the first needle body and the second needle body can be adjusted, thereby adjusting the spacing between the first needle body and the second needle body, and adjusting a circumference of the winding needle. Based on this, it is convenient for the winding device to continue winding through the winding needle with the circumference adjusted to form the next electrode assembly so as to adjust the tap position of the next electrode assembly, reduce the tab misalignment amount, and even eliminate the tab misalignment phenomenon, thereby effectively improving the percent of pass of the electrode assembly wound by the winding device, effectively reducing the defective rate and scrap rate of the electrode assembly wound by the winding device, effectively improving the production efficiency and product quality of mass production of the electrode assembly, and effectively reducing the cost of mass production of the electrode assembly.

The winding device provided in the embodiment of the present application can also reduce the radial dimension of the winding needle by first pulling the first push rod out of the first hole to initially reduce the spacing between the first needle body and the second needle body after winding to form the electrode assembly, so that the contact stress between the winding needle and the electrode assembly can be reduced, thereby facilitating reducing the risk that the needle cannot be pulled out smoothly later. On this basis, the first needle body and the second needle body are successively pulled out of the electrode assembly, so that the needle pulling operation can be realized on the basis of reducing damage and scrapping of the electrode assembly, so as to facilitate the electrode assembly to be separated from the winding needle, thereby facilitating the subsequent processes of the electrode assembly.

In some embodiments, a width of the first adjusting section is gradually reduced in the direction close to the second end.

By adopting the above solution, the first adjusting section can be controlled to move relative to the first adjusting hole section to adjust the contact and cooperation between different width areas of the first adjusting section and different radial dimension areas of the first adjusting hole section, thereby adjusting the abutting pushing effect of the first adjusting section on the first needle body and the second needle body, adjusting the spacing between the first needle body and the second needle body, and adjusting the circumference of the winding needle. Furthermore, based on the data variation trend of the radial dimension of the first adjusting hole section in the axial direction of the winding needle and the data variation trend of the width of the first adjusting section in the axial direction of the winding needle, the relationship between the moving stroke of the first adjusting section in the axial direction of the winding needle and the spacing between the first needle body and the second needle body, as well as the relationship between the moving stroke of the first adjusting section in the axial direction of the winding needle and the circumference of the winding needle can also be estimated. This makes it possible to precisely adjust the spacing between the first needle body and the second needle body and the circumference of the winding needle by controlling the moving stroke of the first adjusting section in the axial direction of the winding needle, thereby helping to improve the adjustment accuracy.

In some embodiments, the winding device further includes:
a first bracket, arranged at the first end and tightly mounted on a side of the first needle body facing away from the second needle body; and
a second bracket, arranged at the first end and tightly mounted on a side of the second needle body facing away from the first needle body.

By adopting the above solution, the first needle body can be supported at the first end by the first bracket tightly mounted on the side of the first needle body facing away from the second needle body, so as to enhance the structural strength of the first needle body and reduce the risk of bending and breaking of the first needle body during needle pulling, needle inserting, and winding. Similarly, the second needle body can be supported at the first end by the second bracket tightly mounted on the side of the second needle body facing away from the first needle body, so as to enhance the structural strength of the second needle body and reduce the risk of bending and breaking of the second needle body during needle pulling, needle inserting, and winding. Thereby, the service life of the winding needle and the winding device can be effectively guaranteed and prolonged.

In some embodiments, the winding device further includes a first supporting seat, and the first supporting seat is arranged at the first end and arranged on a periphery of the first bracket and the second bracket in a sleeving mode; and
the winding device further includes a first elastic member mounted between the first supporting seat and the first bracket, and/or a second elastic member mounted between the first supporting seat and the second bracket.

By adopting the above solution, the first bracket, the second bracket, the first end of the first needle body, and the first end of the second needle body can be reliably supported by the first supporting seat to stabilize the position of the first end of the winding needle. Based on this, it is helpful to stabilize a rotation axis of the winding needle, thereby facilitating the smooth rotation of the winding needle and the smooth winding operation of the winding needle.

On this basis, the first elastic member is elastically connected between the first supporting seat and the first bracket in an abutting mode. Based on this, when the first push rod is inserted into the first hole and the spacing between the first needle body and the second needle body changes, the first elastic member can elastically press the first needle body in an abutting mode to stabilize the state of the first needle body. And/or, the second elastic member is elastically connected between the second supporting seat and the second bracket in an abutting mode. Based on this, when the first push rod is inserted into the first hole and the spacing between the first needle body and the second needle body changes, the second elastic member can elastically press the second needle body in an abutting mode to stabilize the state of the second needle body. Thus, the first elastic member and/or the second elastic member can jointly press the winding needle to reduce the risk of the winding needle jumping during the change of the circumference thereof, so as to enable the winding needle to be stable and enable the winding needle to rotate smoothly and perform the winding operation smoothly at the adjusted circumference, thereby effectively reducing the risk of poor quality of the electrode assembly formed by winding when the winding needle jumps and effectively improving the percent of pass of the electrode assembly wound by the winding device.

In some embodiments, the winding device further includes:
a first driver, connected to an end of the first push rod away from the winding needle and configured to drive the first push rod to reciprocate in the axial direction of the winding needle.

By adopting the above solution, the first push rod can be driven by the first driver to reciprocate in the axial direction of the winding needle, so as to conveniently and quickly control the first push rod to be inserted into or pulled out of the first hole while saving time and effort, and the moving stroke of the first push rod in the first hole can be accurately controlled, thereby facilitating improving the convenience and accuracy of adjusting the circumference of the winding needle.

In some embodiments, the first hole includes a first penetrating hole section, the first adjusting hole section, and a first accommodating hole section which are sequentially connected in the direction close to the second end; and
the first push rod has a first main body section and the first adjusting section arranged at an end of the first main body section, and part of the first main body section is arranged in the first penetrating hole section in a penetrating mode.

By adopting the above solution, the first adjusting section of the first push rod is arranged at the end of the first main body section, so that a functional part of the first push rod for adjusting the spacing between the first needle body and the second needle body is concentrated at the end thereof. Based on this, it is convenient for the first adjusting section to be inserted into the first hole prior to other parts of the first push rod, and the first adjusting section to be pulled out of the first hole after other parts of the first push rod, thereby effectively reducing the influence of other parts of the first push rod on the spacing between the first needle body and the second needle body, so that the change in the spacing between the first needle body and the second needle body is mainly controlled by the cooperation between the first adjusting section and the first adjusting hole section. Correspondingly, the first hole can accommodate, through the first penetrating hole section, the portion of the first main body section inserted into the first hole, and can accommodate, through the first accommodating hole section, the portion of the first adjusting section penetrating out of the first adjusting hole section, thereby effectively reducing the influence of the portion of the first main body section inserted into the first hole on the spacing between the first needle body and the second needle body, and effectively reducing the influence of the portion of the first adjusting section penetrating out the first adjusting hole section on the spacing between the first needle body and the second needle body, so that the change in the spacing between the first needle body and the second needle body is mainly controlled by the cooperation between the first adjusting section and the first adjusting hole section. Thus, the factors affecting the change of the spacing between the first needle body and the second needle body can be reduced, which can help improve the adjustment accuracy.

In some embodiments, the first adjusting section is a wedge-shaped structure, the first adjusting hole section is a wedge-shaped hole, and the first adjusting section and the first adjusting hole section are matched in a wedge shape.

By adopting the above solution, the first adjusting section and the first adjusting hole section can be matched in a wedge shape, so that by adjusting the matching position of the first adjusting section and the first adjusting hole section, the spacing between the first needle body and the second needle body can be accurately adjusted, and the circumference of the winding needle can be accurately adjusted. Furthermore, since surface contact can be formed between the first adjusting section and the first adjusting hole section, the contact between the first adjusting section and the first adjusting hole section can be smooth, so that the spacing between the first needle body and the second needle body can change smoothly and remain stable after adjustment, thereby enabling the winding needle to rotate smoothly and perform the winding operation smoothly at the adjusted circumference, which can effectively reduce the risk of poor quality of the electrode assembly formed by winding when the circumference of the winding needle changes during the winding operation, and can effectively improve the percent of pass of the electrode assembly wound by the winding device.

In some embodiments, the first needle body and the second needle body jointly form a second hole at the second end, at least part of the second hole is a second adjusting hole section, and a radial dimension of the second adjusting hole section is gradually reduced in a direction close to the first end; and the winding device further includes:
a second push rod, inserted into the second hole and capable of reciprocating in the axial direction of the winding needle, where the second push rod has a second adjusting section matched with the second adjusting hole section.

By adopting the above solution, the first push rod can be inserted into and pulled out of the first hole at the first end to adjust the spacing between the first needle body and the second needle body. At the same time, the second push rod can maintain the same movement as the first push rod and be inserted into and pulled out of the second hole at the second end to also participate in adjusting the spacing between the first needle body and the second needle body. Based on this, the first push rod and the second push rod can jointly adjust the spacing between the first needle body and the second needle body, jointly adjust the circumference of the winding needle, and can cause the adjustment amount of the spacing between the first needle body and the second needle body by the second push rod at the second end to be consistent with the adjustment amount of the spacing between the first needle body and the second needle body by the first push rod at the first end, thereby facilitating the winding needle to form the electrode assembly by winding at a circumference with the adjustment amounts consistent at various locations, which can effectively reduce the risk of poor quality of the electrode assembly formed by winding when the circumference has inconsistent adjustment amounts at various locations, and can effectively improve the percent of pass of the electrode assembly wound by the winding device.

In some embodiments, a width of the second adjusting section is gradually reduced in the direction close to the first end.

By adopting the above solution, the second adjusting section can be controlled to move relative to the second adjusting hole section to adjust the contact and cooperation between different width areas of the second adjusting section and different radial dimension areas of the second adjusting hole section, thereby adjusting the abutting pushing effect of the second adjusting section on the first needle body and the second needle body, adjusting the spacing between the first needle body and the second needle body, and adjusting the circumference of the winding needle. Furthermore, based on the data variation trend of the radial dimension of the second adjusting hole section in the axial direction of the winding needle and the data variation trend of the width of the second adjusting section in the axial direction of the winding needle, the relationship between the moving stroke of the second adjusting section in the axial direction of the winding needle and the spacing between the first needle body and the second needle body, as well as the relationship between the moving stroke of the second adjusting section in the axial direction of the winding needle and the circumference of the winding needle can also be estimated. This makes it possible to precisely adjust the spacing between the first needle body and the second needle body and the circumference of the winding needle by controlling the moving stroke of the second adjusting section in the axial direction of the winding needle, thereby helping to improve the adjustment accuracy.

In some embodiments, the winding device further includes:
a second supporting seat, the second supporting seat being provided with a third hole in a side close to the winding needle, where a fourth through hole is formed in a bottom of the third hole, the second end of the winding needle is inserted into the third hole, and the second push rod is arranged in the fourth hole in a penetrating mode.

By adopting the above solution, the second end of the first needle body and the second end of the second needle body can be reliably supported by the second supporting seat to stabilize the position of the second end of the winding needle. Based on this, it is helpful to stabilize the rotation axis of the winding needle, thereby facilitating the smooth rotation of the winding needle and the smooth winding operation of the winding needle. The second push rod can also be supported and positioned by the second supporting seat, so that the second push rod can be accurately inserted into and pulled out of the second hole.

In some embodiments, the winding device further includes:
a third elastic member, mounted in the third hole and arranged on a periphery of the second end of the winding needle in a sleeving mode.

By adopting the above solution, when the second end of the winding needle is inserted into the third hole, the third elastic member can be elastically connected between a hole wall of the third hole and the second end of the winding needle in an abutting mode. Based on this, when the second push rod is inserted into the second hole and the spacing between the first needle body and the second needle body changes, the third elastic member can elastically press the second end of the winding needle in an abutting mode to stabilize the state of the second end of the winding needle. Thus, the risk of the winding needle jumping during the change of the circumference thereof can be effectively reduced, so as to enable the winding needle to be stable and enable the winding needle to rotate smoothly and perform the winding operation smoothly at the adjusted circumference, thereby effectively reducing the risk of poor quality of the electrode assembly formed by winding when the winding needle jumps and effectively improving the percent of pass of the electrode assembly wound by the winding device. Furthermore, by mounting the third elastic member in the third hole, during the process of inserting the second end of the winding needle into the third hole, the insertion resistance of the second end of the winding needle can be effectively reduced by elastic deformation of the third elastic member.

In some embodiments, the winding device further includes:
a second driver, connected to an end of the second push rod away from the winding needle and configured to drive the second push rod to reciprocate in the axial direction of the winding needle.

By adopting the above solution, the second push rod can be driven by the second driver to reciprocate in the axial direction of the winding needle, so as to conveniently and quickly control the second push rod to be inserted into or pulled out of the second hole while saving time and effort, and the moving stroke of the second push rod in the second hole can be accurately controlled, thereby facilitating improving the convenience and accuracy of adjusting the circumference of the winding needle.

In some embodiments, the second hole includes a second penetrating hole section, the second adjusting hole section, and a second accommodating hole section which are sequentially connected in the direction close to the first end; and
the second push rod has a second main body section and the second adjusting section arranged at an end of the second main body section, and part of the second main body section is arranged in the second penetrating hole section in a penetrating mode.

By adopting the above solution, the second adjusting section of the second push rod is arranged at the end of the second main body section, so that a functional part of the second push rod for adjusting the spacing between the first needle body and the second needle body is concentrated at the end thereof. Based on this, it is convenient for the second adjusting section to be inserted into the second hole prior to other parts of the second push rod, and the second adjusting section to be pulled out of the second hole after other parts of the second push rod, thereby effectively reducing the influence of other parts of the second push rod on the spacing between the first needle body and the second needle body, so that the change in the spacing between the first needle body and the second needle body at the second end is mainly controlled by cooperation between the second adjusting section and the second adjusting hole section. Correspondingly, the second hole can accommodate, through the second penetrating hole section, the portion of the second main body section inserted into the second hole, and can accommodate, through the second accommodating hole section, the portion of the second adjusting section penetrating out of the second adjusting hole section, thereby effectively reducing the influence of the portion of the second main body section inserted into the second hole on the spacing between the first needle body and the second needle body, and effectively reducing the influence of the portion of the second adjusting section penetrating out the second adjusting hole section on the spacing between the first needle body and the second needle body, so that the change in the spacing between the first needle body and the second needle body at the second end is mainly controlled by cooperation between the second adjusting section and the second adjusting hole section. Thus, the factors affecting the change of the spacing between the first needle body and the second needle body can be reduced, which can help improve the adjustment accuracy.

In some embodiments, the second adjusting section is a wedge-shaped structure, the second adjusting hole section is a wedge-shaped hole, and the second adjusting section and the second adjusting hole section are matched in a wedge shape.

By adopting the above solution, the second adjusting section and the second adjusting hole section can be matched in a wedge shape, so that by adjusting the matching position of the second adjusting section and the second adjusting hole section, the spacing between the first needle body and the second needle body can be accurately adjusted, and the circumference of the winding needle can be accurately adjusted. Furthermore, since surface contact can be formed between the second adjusting section and the second adjusting hole section, the contact between the second adjusting section and the second adjusting hole section can be smooth, so that the spacing between the first needle body and the second needle body can change smoothly and remain stable after adjustment, thereby enabling the winding needle to rotate smoothly and perform the winding operation smoothly at the adjusted circumference, which can effectively reduce the risk of poor quality of the electrode assembly formed by winding when the circumference of the winding needle changes during the winding operation, and can effectively improve the percent of pass of the electrode assembly wound by the winding device.

In a second aspect, a winding system is provided, and the winding system includes the winding device provided in the embodiment of the present application.

By adopting the above solution, the winding system can form an electrode assembly by winding of the winding device provided in the embodiment of the present application, and when it is found that the tab misalignment phenomenon occurs in a previous electrode assembly wound by the winding device, a circumference of the winding needle of the winding device can be adjusted according to the tab misalignment amount of the previous electrode assembly, and then the adjusted winding device continues winding to form a next electrode assembly so as to reduce the tab misalignment amount or even eliminate the tab misalignment phenomenon, thereby effectively improving the production efficiency and product quality of the winding operation and effectively reducing the cost loss of the winding operation.

In some embodiments, the winding system is configured to wind a first electrode plate, a separator, and a second electrode plate to form an electrode assembly, and the winding system further includes a first detection device, configured to detect tabs of the first electrode plate and/or the second electrode plate.

By adopting the above solution, the first detection device can be used to identify and detect the tab of the first electrode plate to detect whether the first electrode plate has the tab misalignment phenomenon, and/or identify and detect the tab of the second electrode plate to detect whether the second electrode plate has the tab misalignment phenomenon. Based on this, the tab misalignment amount of the current electrode assembly can be detected in real time while the winding device forms the electrode assembly by winding, so that the winding device can adjust the circumference of the winding needle subsequently according to the tab misalignment amount of the previous electrode assembly, and then forms the next electrode assembly by winding, thereby timely adjusting the tab misalignment amount of the next electrode assembly, effectively improving the production efficiency and product quality of the winding operation, and effectively reducing the cost loss of the winding operation.

In a third aspect, a winding method is provided, where the winding method is implemented by the winding device provided in the embodiment of the present application, and the winding method includes the following steps:
winding a first positive electrode plate, a first separator, and a first negative electrode plate by the winding device to form a first electrode assembly, and obtaining a misalignment amount of a test tab, where the test tab is at least part of a tab on the first positive electrode plate and/or the first negative electrode plate;
obtaining an adjustment amount of a circumference of the winding needle according to the misalignment amount;
adjusting a spacing between the first needle body and the second needle body according to the adjustment amount; and
winding a second positive electrode plate, a second separator, and a second negative electrode plate by the winding device with the spacing adjusted to form a second electrode assembly.

By adopting the above solution, when the first electrode assembly is wound by the winding device, the misalignment amount of the test tab can be measured in real time, and the adjustment amount of the circumference of the winding needle can be obtained according to the misalignment amount of the test tab. Based on this, when it is found that the first electrode assembly wound by the winding device has the tab misalignment phenomenon, the winding device can adjust the spacing between the first needle body and the second needle body according to the adjustment amount of the circumference of the winding needle after completing the winding operation of the first electrode assembly and before starting the winding operation of the second electrode assembly, so as to adjust the circumference of the winding needle. Subsequently, the winding device continues winding through the winding needle with the circumference adjusted to form the second electrode assembly, so as to adjust the tab position of the second electrode assembly, thereby reducing the tab misalignment amount or even eliminating the tab misalignment phenomenon. Thus, the situation of tab misalignment of the electrode assembly can be adjusted directly, effectively, conveniently, and quickly, thereby effectively improving the percent of pass of the electrode assembly wound by the winding device, effectively reducing the defective rate and scrap rate of the electrode assembly wound by the winding device, effectively improving the production efficiency and product quality of mass production of the electrode assembly, and effectively reducing the cost of mass production of the electrode assembly.

In some embodiments, the step of obtaining a misalignment amount of a test tab includes:
obtaining a value of a test angle at which the winding needle rotates corresponding to the test tab, where the value of the test angle is a value of an angle at which the winding needle rotates from a timing zero point to the time when it is detected that the test tab passes through a tab detection device;
comparing the value of the test angle of the test tab with a value of a corresponding reference angle to obtain an angle difference value of the test tab, where the value of the reference angle is a value of an angle at which the winding needle rotates from the timing zero point to the time when it is detected that a tab at a standard position passes through the tab detection device; and
obtaining the misalignment amount of the test tab according to the angle difference value.

By adopting the above solution, during the period when the winding device forms the first electrode assembly by winding, each time the tab detection device identifies and detects the test tab, a value of an angle at which the winding needle rotates from the timing zero point to the current moment can be recorded as the value of the test angle, so as to obtain the misalignment amount of the test tab according to the angle difference value between the value of the test angle and the value of the reference angle. Thus, the misalignment amount of the test tab can be obtained directly, effectively, conveniently, and quickly, thereby facilitating the winding needle to adjust the circumference subsequently according to the misalignment amount.

In some embodiments, in the step of obtaining the misalignment amount of the test tab according to the angle difference value, first a ratio of the angle difference value to 360° is obtained according to the angle difference value corresponding to the test tab, and then the ratio is multiplied by a circumference of a circle layer where the test tab is located to obtain the misalignment amount corresponding to the test tab.

By adopting the above solution, a direct and quantitative method can be used to accurately measure the corresponding misalignment amount of the test tab based on the angle difference value, so that the winding needle can subsequently adjust the circumference according to the accurately quantified misalignment amount.

In some embodiments, in the step of obtaining the adjustment amount of the circumference of the winding needle according to the misalignment amount, the misalignment amount of the test tab is first divided by a circle number of the circle layer where the test tab is located to obtain an average misalignment amount, and then the average misalignment amount is multiplied by an adjustment coefficient to obtain the adjustment amount of the circumference of the winding needle.

By adopting the above solution, a direct, effective, and quantifiable method can be adopted, so that the adjustment result can be continuously optimized according to the on-site condition. Based on the misalignment amount of the test tab, the adjustment amount of the circumference of the winding needle can be obtained, so that the winding needle can subsequently adjust the circumference according to the calculated adjustment amount, and it is also convenient to continue to optimize the adjustment of the circumference of the winding needle according to the situation of tab misalignment of the electrode assembly formed by winding of the adjusted winding needle, so as to gradually reduce the situation of tab misalignment.

### BRIEF DESCRIPTION OF DRAWINGS

In order to illustrate the technical solutions in embodiments of the present application more clearly, the drawings to be used in description of the embodiments of the present application or exemplary technologies will be briefly introduced below. Obviously, the drawings described below are only some embodiments of the present application. For those of ordinary skill in the art, other drawings can also be obtained based on these drawings without any creative effort.
FIG. 1 is a schematic structural view of a battery according to an embodiment of the present application;
FIG. 2 is a schematic structural diagram of a winding device according to an embodiment of the present application;
FIG. 3 is an exploded view of a partial structure of the winding device in FIG. 2;
FIG. 4 is a top view of the partial structure of the winding device in FIG. 2;
FIG. 5 is a sectional view taken along A-A in FIG. 4;
FIG. 6 is an enlarged view of a region D in FIG. 5;
FIG. 7 is an enlarged view of a region E in FIG. 5;
FIG. 8 is a sectional view taken along B-B in FIG. 4;
FIG. 9 is a sectional view taken along C-C in FIG. 4;
FIG. 10 is a schematic structural view of a winding system according to an embodiment of the present application;
FIG. 11 is a schematic structural view of a winding system according to another embodiment of the present application; and
FIG. 12 is a flowchart of a winding method according to an embodiment of the present application.

### List of Reference Numerals in the Drawings:

1-battery, 11-housing, 12-electrode assembly, 121-main body portion, 122-positive electrode tab, 123-negative electrode tab, 13-current collector;
10-winding device, 101-winding needle, 1011-first needle body, 1012-second needle body, 1013-first end, 1014-second end, 1015-first hole, 10151-first adjusting hole section, 10152-first penetrating hole section, 10153-first accommodating hole section, 1016-second hole, 10161-second adjusting hole section, 10162-second penetrating hole section, 10163-second accommodating hole section; 102-first push rod, 1021-first adjusting section, 1022-first main body section; 103-first bracket; 104-second bracket; 105-first supporting seat; 106-first elastic member; 107-second elastic member; 108-first driver; 109-second push rod, 1091-second adjusting section, 1092-second main body section; 110-second supporting seat, 1101-third hole, 1102-fourth hole; 111-third elastic member; 112-second driver;
20-first electrode plate, 30-second electrode plate, 40-separator; 50-unwinding device; 60-first detection device; 70-second detection device.

### DETAILED DESCRIPTION

In order to make the technical problems, technical solutions, and beneficial effects to be solved by the present application clear, the following is a detailed explanation of the present application in conjunction with the accompanying drawings and embodiments. It should be understood that the specific embodiments described herein are merely used to explain the present application but are not intended to limit the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and second" may explicitly or implicitly include one or more features. In the description of the present application, "plurality" means two or more, unless otherwise expressly and specifically defined.

In the present application, unless otherwise expressly specified and limited, the terms "mount" , "connected", "connect" and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or the interaction of two elements. For those of ordinary skill in the art, the specific meanings of the above terms in the present application can be understood according to specific situations.

The battery in the present application may be a minimum unit for storing and outputting electric energy, namely, a battery cell, or modular structure including one or more battery cells to provide a higher voltage and capacity, such as a battery module or a battery pack, which is not limited in the present application. The battery cell may be a lithium-ion secondary battery, a lithium-ion primary battery, a lithium-sulfur battery, a sodium-lithium-ion battery, a sodium-ion battery, a magnesium-ion battery, or the like. The battery cell may be cylindrical, flat, cuboid, or in other shapes. The battery cell may adopt different encapsulation methods to form a cylindrical battery cell, a prismatic battery cell, a pouch battery cell, or the like, which is not limited in the present application.

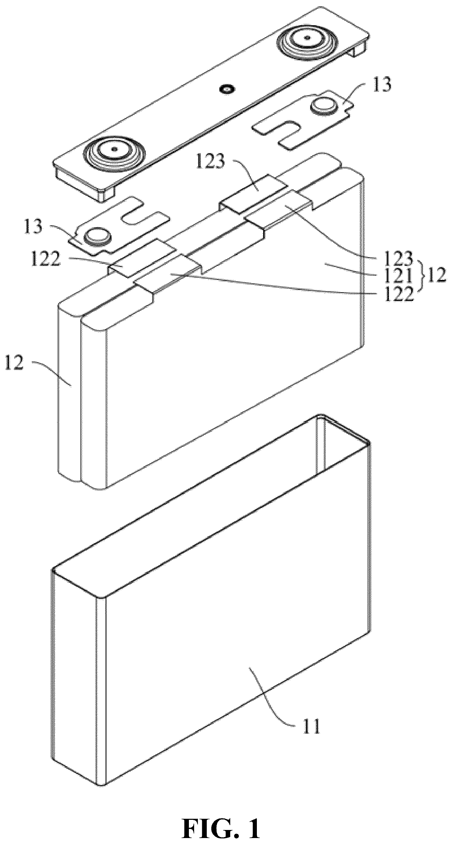

As shown in FIG. 1, a battery 1 generally includes components such as a housing 11, an electrode assembly 12, and a current collector 13. The housing 11 is a component for forming the internal environment of the battery 1, and an accommodating space for accommodating the components such as the electrode assembly 12 is formed in the housing 11.

The electrode assembly 12 is a component in the battery 1 where an electrochemical reaction occurs. The electrode assembly 12 is formed by winding a positive electrode plate, a negative electrode plate, and a separator arranged between the positive electrode plate and the negative electrode plate. Specifically, during the machining process of the electrode assembly 12, the positive electrode plate, the separator, and the negative electrode plate can be firstly wound together by a winding device 10 to form a preformed (e.g., circular) electrode assembly 12, then the preformed electrode assembly 12 can be clamped from the winding device 10 by a clamping needle device and the preformed electrode assembly 12 is transferred to a pre-pressing device, and finally, the preformed electrode assembly 12 can be pre-pressed into a flat (e.g., square) electrode assembly 12 by the pre-pressing device on the basis of the clamping needle device cooperating with a flattening electrode assembly 12.

The portions, with active materials, of the positive electrode plate and the negative electrode plate in the electrode assembly 12 constitute a main body portion 121 of the electrode assembly 12, the portions, without active materials, of the positive electrode plate and the negative electrode plate respectively constitute a tab, and the tabs are current transmission ends of the electrode assembly 12, for transmitting a current. The tab of the positive electrode plate is a positive electrode tab 122, and the tab of the negative electrode plate is a negative electrode tab 123. The positive electrode tab 122 and the negative electrode tab 123 may be jointly located at one end of the main body portion 121 or located at two ends of the main body portion 121, respectively.

The current collector 13 is arranged on a side of the electrode assembly 12 where the tab is arranged, and is a component used to fix the tabs of the electrode assembly 12 together to serve as an electric energy lead-out end of the electrode assembly 12.

Ideally, the positive electrode tabs 122 of the electrode assembly 12 are aligned with each other and connected to the corresponding current collector 13, and the negative electrode tabs 123 of the electrode assembly 12 are aligned with each other and connected to the corresponding current collector 13.

However, during the winding operation of the winding device, as the number of winding turns increases, factors such as changes in the thickness of the positive electrode plate, changes in the thickness of the negative electrode plate, and changes in the thickness of the separator can easily cause tabs on the electrode plates to enter the winding device prematurely or later, resulting in that the final electrode assembly 12 formed by winding has the tab misalignment phenomenon, that is, the tab alignment degree is poor, which makes it difficult for the tabs to be aligned with each other and connected to the corresponding current collector 13, resulting in a high defective rate and scrap rate of the wound electrode assembly 12.

Thus, some embodiments of the present application provide a winding device, when it is found that the tab misalignment phenomenon occurs in a previous electrode assembly wound by the winding device, the winding device can control, according to the tab misalignment amount of the previous electrode assembly, a first push rod to be inserted into or pulled out of a first hole before starting to wind a next electrode assembly, and control the first push rod to reciprocate in an axial direction of a winding needle to adjust a matching position of a first adjusting section of the first push rod and a first adjusting hole section of the first hole, so that an abutting pushing effect of the first adjusting section on a first needle body and a second needle body can be adjusted, thereby adjusting a spacing between the first needle body and the second needle body, and adjusting a circumference of the winding needle. Based on this, it is convenient for the winding device to continue winding through the winding needle with the circumference adjusted to form the next electrode assembly so as to adjust the tap position of the next electrode assembly, reduce the tab misalignment amount, and even eliminate the tab misalignment phenomenon, thereby effectively improving the percent of pass of the electrode assembly wound by the winding device, effectively reducing the defective rate and scrap rate of the electrode assembly wound by the winding device, effectively improving the production efficiency and product quality of mass production of the electrode assembly, and effectively reducing the cost of mass production of the electrode assembly.

In order to explain the technical solutions provided by the present application, specific accompanying drawings and embodiments will be described in detail below.

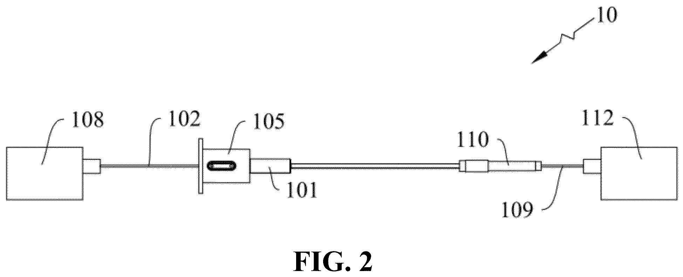

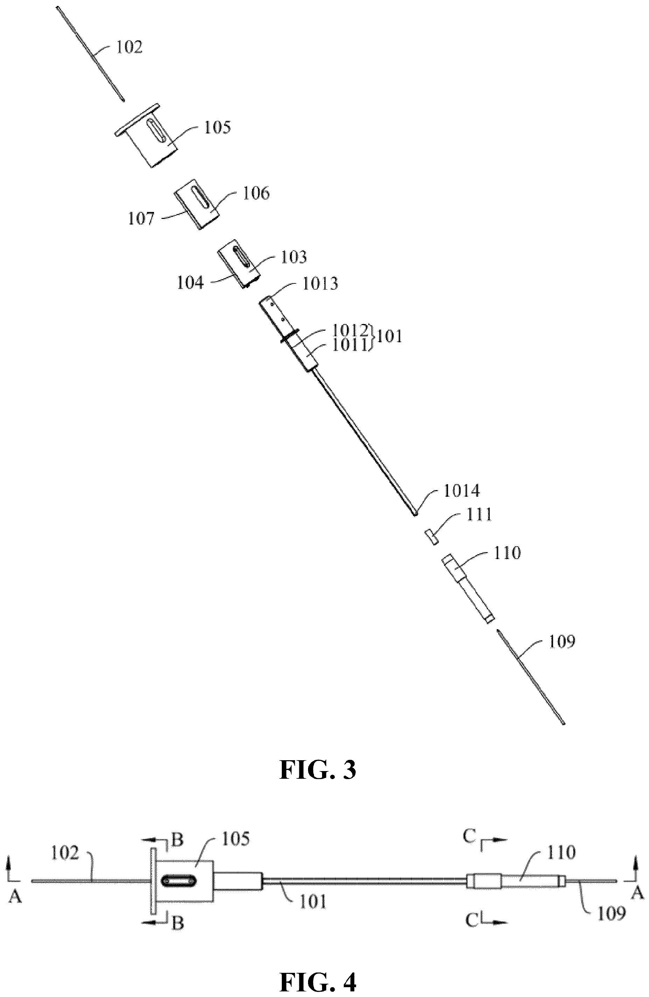

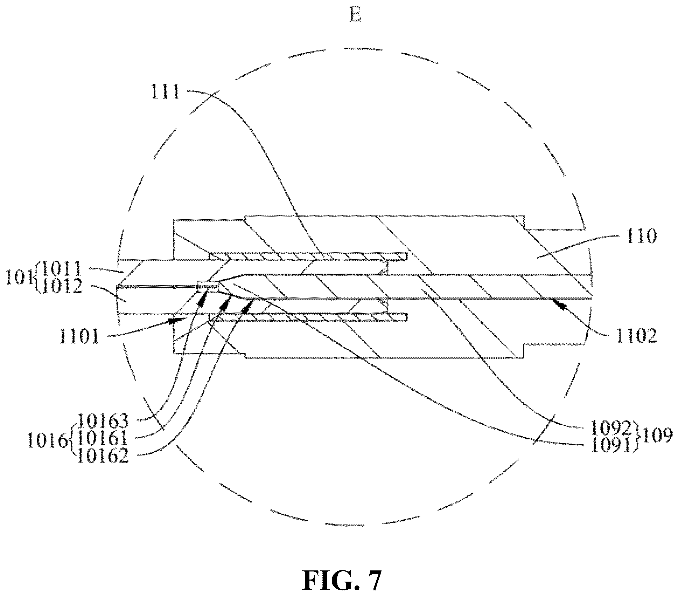

Please refer to FIG. 2 and FIG. 3, some embodiments of the present application provide a winding device 10. Please refer to FIG. 4, FIG. 5, FIG. 6, and FIG. 7 together, the winding device 10 includes a winding needle 101 and a first push rod 102. The winding needle 101 includes a first needle body 1011 and a second needle body 1012 which are parallel to each other and have an adjustable spacing therebetween, the winding needle 101 has a first end 1013 and a second end 1014 opposite to each other, the first needle body 1011 and the second needle body 1012 jointly form a first hole 1015 at the first end 1013, at least part of the first hole 1015 is a first adjusting hole section 10151, and a radial dimension of the first adjusting hole section 10151 is gradually reduced in a direction close to the second end 1014. The first push rod 102 is inserted into the first hole 1015 and capable of reciprocating in an axial direction of the winding needle 101, and the first push rod 102 has a first adjusting section 1021 matched with the first adjusting hole section 10151.

It should be noted that, please refer to FIG. 1 together, the winding needle 101 is a component used to assist winding and forming of the electrode assembly 12. The winding needle 101 is connected to a driving mechanism (not shown in the figure). The winding needle 101 can be driven by a driving device to rotate around a central axis thereof to wind the positive electrode plate, the separator, and the negative electrode plate to form the electrode assembly 12. This embodiment does not limit the shape of the winding needle 101, which may be, for example, a diamond-shaped winding needle, an elliptical winding needle, a circular winding needle, and the like.

The winding needle 101 is divided into the first needle body 1011 and the second needle body 1012 along a longitudinal section thereof (i.e., a section parallel to the axial direction of the winding needle 101). The first needle body 1011 and the second needle body 1012 are independently formed solid structures in the shape of a needle, a column or a strip. This embodiment does not limit the shape, dimension, material, etc. of the first needle body 1011 and the second needle body 1012. The first needle body 1011 and the second needle body 1012 are arranged opposite to each other in a radial direction of the winding needle 101 and are parallel to each other. There is a spacing between the first needle body 1011 and the second needle body 1012, and the spacing is adjustable. The axial direction of the winding needle 101 refers to a direction of the central axis of the winding needle 101, and the radial direction of the winding needle 101 refers to a direction passing through the central axis of the winding needle 101 and perpendicular to the central axis of the winding needle 101.

The winding needle 101 has the first end 1013 and the second end 1014 opposite to each other in the axial direction thereof. The winding needle 101 is provided with a first hole 1015 in an end surface of the first end 1013. A part of the first hole 1015 is formed in the first needle body 1011, and another part of the first hole 1015 is formed in the second needle body 1012. The first hole 1015 is defined by the first needle body 1011 and the second needle body 1012 together. Part or all of the first hole 1015 is the first adjusting hole section 10151. The first adjusting hole section 10151 may be a circular hole, a rectangular hole, or a hole in other shapes. When the first adjusting hole section 10151 is a circular hole, a radial direction of the first adjusting hole section 10151 refers to a diameter direction of the first adjusting hole section 10151; when the first adjusting hole section 10151 is a non-circular hole, the radial direction of the first adjusting hole section 10151 refers to a direction passing through a central axis of the first adjusting hole section 10151 and perpendicular to the central axis of the first adjusting hole section 10151. A radial dimension of the first adjusting hole section 10151 is gradually reduced in the direction close to the second end 1014. In other words, the radial dimension of the first adjusting hole section 10151 is gradually expanded in a direction away from the second end 1014.

It should also be noted that the first push rod 102 is a rod-shaped structure for adjusting the spacing between the first needle body 1011 and the second needle body 1012, that is, a rod-shaped structure for adjusting the circumference of the winding needle 101. This embodiment does not limit the shape, dimension, material, etc. of the first push rod 102.

One end of the first push rod 102 can be inserted into and pulled out of the first hole 1015. The first push rod 102 can be driven manually or electrically to achieve reciprocation in the axial direction of the winding needle 101. The first push rod 102 has a first adjusting section 1021, and the first adjusting section 1021 corresponds to and cooperates with the first adjusting hole section 10151. When the first push rod 102 reciprocates in the axial direction of the winding needle 101, the first adjusting section 1021 will also reciprocate relative to the first adjusting hole section 10151. Since the radial dimension of the first adjusting hole section 10151 is gradually reduced in the direction close to the second end 1014, when the first adjusting section 1021 moves relative to the first adjusting hole section 10151 in the direction close to the second end 1014, the first adjusting section 1021 will move to an area where the radial dimension of the first adjusting hole section 10151 gradually decreases. At this time, as the first adjusting section 1021 moves, the first adjusting section 1021 will gradually push the first needle body 1011 and the second needle body 1012 in an abutting mode, so that the spacing between the first needle body 1011 and the second needle body 1012 gradually increases, and the circumference of the winding needle 101 gradually increases; on the contrary, when the first adjusting section 1021 moves relative to the first adjusting hole section 10151 in the direction away from the second end 1014, the first adjusting section 1021 will move to an area where the radial dimension of the first adjusting hole section 10151 gradually increases. At this time, as the first adjusting section 1021 moves, the first adjusting section 1021 will gradually reduce the abutting push on the first needle body 1011 and the second needle body 1012, so that the spacing between the first needle body 1011 and the second needle body 1012 gradually decreases, and the circumference of the winding needle 101 gradually decreases.

Based on the above structure, before starting the winding operation, the spacing between the first needle body 1011 and the second needle body 1012 can be used as a clamping space for clamping at least one of the separator, the positive electrode plate, and the negative electrode plate. Specifically, in a possible implementation, firstly, one of the first needle body 1011 and the second needle body 1012 can be enabled to move in the axial direction of the winding needle 101 to complete the needle inserting operation, and then at least one of the separator, the positive electrode plate, and the negative electrode plate is conveyed to the needle body that completes the needle inserting operation, and then the other one of the first needle body 1011 and the second needle body 1012 is moved in the axial direction of the winding needle 101 to complete the needle inserting operation, so that the first needle body 1011 and the second needle body 1012 are restored to relative setting, and the first needle body 1011 and the second needle body 1012 can jointly clamp at least one of the separator, the positive electrode plate, and the negative electrode plate therebetween. In another possible implementation, the first needle body 1011 and the second needle body 1012 can be first arranged opposite to each other, and then at least one of the separator, the positive electrode plate, and the negative electrode plate can be conveyed to the clamping space between the first needle body 1011 and the second needle body 1012, so that the first needle body 1011 and the second needle body 1012 can jointly clamp at least one of the separator, the positive electrode plate and the negative electrode plate therebetween. In this way, it is convenient for the winding needle 101 to subsequently wind the positive electrode plate, the separator, and the negative electrode plate around a periphery of the winding needle 101.

Before starting the winding operation, and under the premise that the first needle body 1011 and the second needle body 1012 are arranged opposite to each other, the position of the first push rod 102 may not be adjusted according to the fact that there is no tab misalignment in the previous electrode assembly 12 wound by the winding device 10. Specifically, if the first push rod 102 is in a state of being pulled out of the first hole 1015 when the winding device 10 winds the previous electrode assembly 12, the state of the first push rod 102 being pulled out of the first hole 1015 is maintained; if the first push rod 102 is in a state of being inserted into the first hole 1015 when the winding device 10 winds the previous electrode assembly 12, the state of the first push rod 102 being inserted into the first hole 1015 is maintained, and the position of the first push rod 102 relative to the first hole 1015 is maintained unchanged. In this way, the spacing between the first needle body 1011 and the second needle body 1012 and the circumference of the winding needle 101 can be maintained unchanged easily, so that the winding device 10 can continue to form the next electrode assembly 12 by winding of the winding needle 101 with the circumference maintained unchanged.

On the contrary, according to the situation that the previous electrode assembly 12 wound the winding device 10 has the tab misalignment phenomenon, and according to the measured tab misalignment amount, by controlling the first push rod 102 to be inserted into or pulled out of the first hole 1015, and by controlling the first push rod 102 to reciprocate in the axial direction of the winding needle 101, the matching position of the first adjusting section 1021 of the first push rod 102 and the first adjusting hole section 10151 of the first hole 1015 can be adjusted, so that the abutting pushing effect of the first adjusting section 1021 on the first needle body 1011 and the second needle body 1012 can be adjusted, thereby adjusting the spacing between the first needle body 1011 and the second needle body 1012, and adjusting the circumference of the winding needle 101. Specifically, the first adjusting section 1021 can be controlled to move relative to the first adjusting hole section 10151 in the direction close to the second end 1014, so that the first adjusting section 1021 moves to the area where the radial dimension of the first adjusting hole section 10151 gradually decreases. At this time, as the first adjusting section 1021 moves, the first adjusting section 1021 will gradually push the first needle body 1011 and the second needle body 1012 in an abutting mode, causing the spacing between the first needle body 1011 and the second needle body 1012 to gradually increase, and the circumference of the winding needle 101 to gradually increase; on the contrary, by controlling the first adjusting section 1021 to move relative to the first adjusting hole section 10151 in the direction away from the second end 1014, or even controlling the first push rod 102 to be pulled out of the first hole 1015, the first adjusting section 1021 can move to the area where the radial dimension of the first adjusting hole section 10151 gradually increases. At this time, as the first adjusting section 1021 moves, the first adjusting section 1021 will gradually reduce abutting pushing on the first needle body 1011 and the second needle body 1012, so that the spacing between the first needle body 1011 and the second needle body 1012 gradually decreases, and the circumference of the winding needle 101 gradually decreases. In this way, it can be convenient for the winding device 10 to continue winding through the winding needle 101 with the circumference adjusted to form the next electrode assembly 12 so as to adjust the tap position of the next electrode assembly 12, reduce the tab misalignment amount, and even eliminate the tab misalignment phenomenon.

During the winding operation, the first needle body 1011 and the second needle body 1012 rotate together around the central axis of the winding needle 101 to wind the positive electrode plate, the separator, and the negative electrode plate to form the electrode assembly 12.

After completing the winding operation, the first push rod 102 can be first pulled out of the first hole 1015 to initially reduce the spacing between the first needle body 1011 and the second needle body 1012, so as to reduce the radial dimension of the winding needle 101 and reduce the contact stress between the winding needle 101 and the electrode assembly 12, thereby facilitating reducing the risk that the needle cannot be pulled out smoothly later. Then, the first needle body 1011 and the second needle body 1012 are moved in sequence in the axial direction of the winding needle 101 to successively pull the first needle body 1011 and the second needle body 1012 out of the electrode assembly 12, thereby completing the needle pulling operation. In this way, on the basis of reducing the risk of damaging the electrode assembly 12, the electrode assembly 12 can be easily separated from the winding needle 101, which facilitates the subsequent process of the electrode assembly 12.

Thus, when it is found that the tab misalignment phenomenon occurs in the previous electrode assembly 12 wound by the winding device 10, the winding device 10 provided in the embodiment of the present application can control, according to the tab misalignment amount of the previous electrode assembly 12, the first push rod 102 to be inserted into or pulled out of the first hole 1015 before starting to wind the next electrode assembly 12, and control the first push rod 102 to reciprocate in the axial direction of the winding needle 101 to adjust the matching position of the first adjusting section 1021 of the first push rod 102 and the first adjusting hole section 10151 of the first hole 1015, so that an abutting pushing effect of the first adjusting section 1021 on the first needle body 1011 and the second needle body 1012 can be adjusted, thereby adjusting the spacing between the first needle body 1011 and the second needle body 1012, and adjusting the circumference of the winding needle 101. Based on this, it can be convenient for the winding device 10 to continue winding through the winding needle 101 with the circumference adjusted to form the next electrode assembly 12 so as to adjust the tap position of the next electrode assembly 12, reduce the tab misalignment amount, and even eliminate the tab misalignment phenomenon, thereby effectively improving the percent of pass of the electrode assembly 12 wound by the winding device 10, effectively reducing the defective rate and scrap rate of the electrode assembly 12 wound by the winding device 10, effectively improving the production efficiency and product quality of mass production of the electrode assembly 12, and effectively reducing the cost of mass production of the electrode assembly 12.

The winding device 10 provided in the embodiment of the present application can also reduce the radial dimension of the winding needle 101 by first pulling the first push rod 102 out of the first hole 1015 to initially reduce the spacing between the first needle body 1011 and the second needle body 1012 after winding to form the electrode assembly 12, so that the contact stress between the winding needle 101 and the electrode assembly 12 can be reduced, thereby facilitating reducing the risk that the needle cannot be pulled out smoothly later. On this basis, the first needle body 1011 and the second needle body 1012 are successively pulled out of the electrode assembly 12, so that the needle pulling operation can be realized on the basis of reducing damage and scrapping of the electrode assembly 12, so as to facilitate the electrode assembly 12 to be separated from the winding needle 101, thereby facilitating the subsequent processes of the electrode assembly 12.

Please refer to FIG. 4, FIG. 5, and FIG. 6, in some embodiments of the present application, a width of the first adjusting section 1021 is gradually reduced in the direction close to the second end 1014.

It should be noted that the width of the first adjusting section 1021 refers to the dimension of the first adjusting section 1021 in a direction of the spacing between the first needle body 1011 and the second needle body 1012. Corresponding to the design that the radial dimension of the first adjusting hole section 10151 is gradually reduced in the direction close to the second end 1014, the width of the first adjusting section 1021 is also gradually reduced in the direction close to the second end 1014. In other words, the width of the first adjusting section 1021 is gradually expanded in the direction away from the second end 1014.

Based on this, please refer to FIG. 1 together, before starting the winding operation, and under the premise that the first needle body 1011 and the second needle body 1012 are arranged opposite to each other, according to the situation that the previous electrode assembly 12 formed by winding of the winding device 10 has a tab misalignment phenomenon, and according to the measured tab misalignment amount, by controlling the first adjusting section 1021 to move relative to the first adjusting hole section 10151 in the direction close to the second end 1014, the area with a larger width of the first adjusting section 1021 moves to the area where the radial dimension of the first adjusting hole section 10151 gradually decreases. At this time, as the first adjusting section 1021 moves, the first adjusting section 1021 will gradually push the first needle body 1011 and the second needle body 1012 in an abutting mode, so that the spacing between the first needle body 1011 and the second needle body 1012 gradually increases, and the circumference of the winding needle 101 gradually increases. Or, the first adjusting section 1021 can be controlled to move relative to the first adjusting hole section 10151 in the direction away from the second end 1014, or even be pulled out of the first hole 1015, so that the area with a larger width of the first adjusting section 1021 moves to the area where the radial dimension of the first adjusting hole section 10151 gradually increases. At this time, as the first adjusting section 1021 moves, the first adjusting section 1021 will gradually reduce abutting pushing on the first needle body 1011 and the second needle body 1012, so that the spacing between the first needle body 1011 and the second needle body 1012 gradually decreases, and the circumference of the winding needle 101 gradually decreases.

Thus, by adopting the above solution, the first adjusting section 1021 can be controlled to move relative to the first adjusting hole section 10151 to adjust the contact and cooperation between different width areas of the first adjusting section 1021 and different radial dimension areas of the first adjusting hole section 10151, thereby adjusting the abutting pushing effect of the first adjusting section 1021 on the first needle body 1011 and the second needle body 1012, adjusting the spacing between the first needle body 1011 and the second needle body 1012, and adjusting the circumference of the winding needle 101. Furthermore, based on the data variation trend of the radial dimension of the first adjusting hole section 10151 in the axial direction of the winding needle 101 and the data variation trend of the width of the first adjusting section 1021 in the axial direction of the winding needle 101, the relationship between the moving stroke of the first adjusting section 1021 in the axial direction of the winding needle 101 and the spacing between the first needle body 1011 and the second needle body 1012, as well as the relationship between the moving stroke of the first adjusting section 1021 in the axial direction of the winding needle 101 and the circumference of the winding needle 101 can also be estimated. This makes it possible to precisely adjust the spacing between the first needle body 1011 and the second needle body 1012 and the circumference of the winding needle 101 by controlling the moving stroke of the first adjusting section 1021 in the axial direction of the winding needle 101, thereby helping to improve the adjustment accuracy.

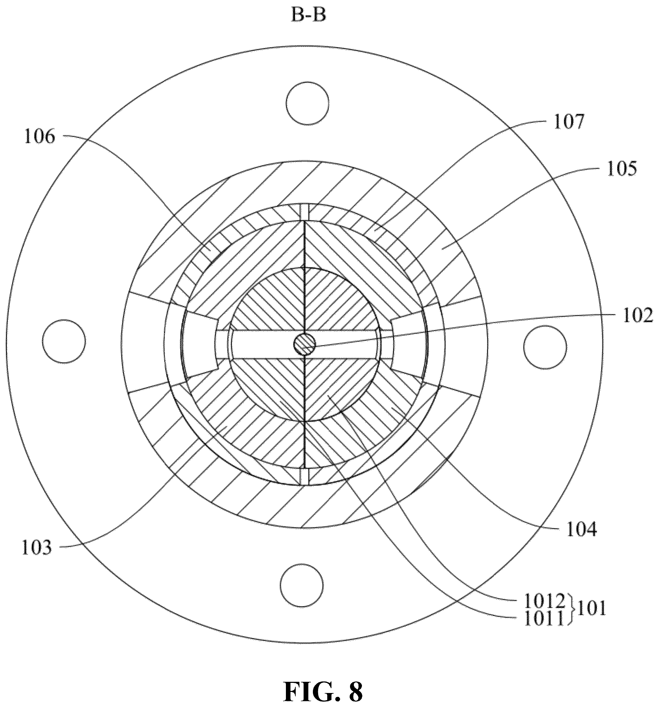

Please refer to FIG. 4, FIG. 5, FIG. 6, and FIG. 8, in some embodiments of the present application, the winding device 10 further includes a first bracket 103 and a second bracket 104. The first bracket 103 is arranged at the first end 1013 and tightly mounted on a side of the first needle body 1011 facing away from the second needle body 1012; and the second bracket 104 is arranged at the first end 1013 and tightly mounted on a side of the second needle body 1012 facing away from the first needle body 1011.

It should be noted that the first bracket 103 is a structure that supports the first needle body 1011 at the first end 1013, which can enhance the structural strength of the first needle body 1011 and reduce the risk of bending or breaking of the first needle body 1011. The first bracket 103 may be tightly mounted on the side of the first needle body 1011 facing away from the second needle body 1012 by, but not limited to, bolts. When the first needle body 1011 moves in the axial direction of the winding needle 101 to perform the needle pulling or needle inserting operation, the first bracket 103 can move in the axial direction of the winding needle 101 synchronously with the first needle body 1011. Optionally, the first bracket 103 can be connected to a stretching mechanism (not shown in the figure) so that the stretching mechanism can drive the first needle body 1011 to move in the axial direction of the winding needle 101 through the first bracket 103 to complete the needle pulling or inserting operation of the first needle body 1011.

The second bracket 104 and the first bracket 103 are arranged opposite to each other and are independently formed. The second bracket 104 is a structure that supports the second needle body 1012 at the first end 1013, which can enhance the structural strength of the second needle body 1012 and reduce the risk of bending or breaking of the second needle body 1012. The second bracket 104 may be tightly mounted on the side of the second needle body 1012 facing away from the first needle body 1011 by, but not limited to, bolts. When the second needle body 1012 moves in the axial direction of the winding needle 101 to perform the needle pulling or needle inserting operation, the second bracket 104 can move in the axial direction of the winding needle 101 synchronously with the second needle body 1012. Optionally, the second bracket 104 can be connected to a stretching mechanism (not shown in the figure) so that the stretching mechanism can drive the second needle body 1012 to move in the axial direction of the winding needle 101 through the second bracket 104 to complete the needle pulling or inserting operation of the second needle body 1012.

By adopting the above solution, the first needle body 1011 can be supported at the first end 1013 by the first bracket 103 tightly mounted on the side of the first needle body 1011 facing away from the second needle body 1012, so as to enhance the structural strength of the first needle body 1011 and reduce the risk of bending and breaking of the first needle body 1011 during needle pulling, needle inserting, and winding. Similarly, the second needle body 1012 can be supported at the first end 1013 by the second bracket 104 tightly mounted on the side of the second needle body 1012 facing away from the first needle body 1011, so as to enhance the structural strength of the second needle body 1012 and reduce the risk of bending and breaking of the second needle body 1012 during needle pulling, needle inserting, and winding. Thereby, the service life of the winding needle 101 and the winding device 10 can be effectively guaranteed and prolonged.

In addition, in other possible implementations, the first bracket 103 and the second bracket 104 may be elastically connected, and the first needle body 1011 and the second needle body 1012 may be clamped therebetween at the first end 1013. With such arrangement, the elastically connected first bracket 103 and second bracket 104 can jointly clamp the first needle body 1011 and the second needle body 1012 at the first end 1013 to stabilize the relative states thereof, so as to effectively reduce the risk of the winding needle 101 jumping during the period when the spacing between the first needle body 1011 and the second needle body 1012 and the circumference of the winding needle 101 change, and even during the winding operation of the winding needle 101, thereby enabling the winding needle 101 to function stably and effectively reducing the risk of poor quality of the electrode assembly 12 formed by winding when the winding needle 101 jumps. Moreover, in this scenario, the first bracket 103 and the second bracket 104 maintain an elastic connection, that is, the first bracket 103 is not firmly connected to the first needle body 1011, and the second bracket 104 is not firmly connected to the second needle body 1012. Based on this, when the first needle body 1011 moves in the axial direction of the winding needle 101 to perform the needle pulling or needle inserting operation, the first bracket 103 does not move in the axial direction of the winding needle 101 synchronously with the first needle body 1011; when the second needle body 1012 moves in the axial direction of the winding needle 101 to perform needle pulling or needle inserting operation, the second bracket 104 does not move in the axial direction of the winding needle 101 synchronously with the second needle body 1012.

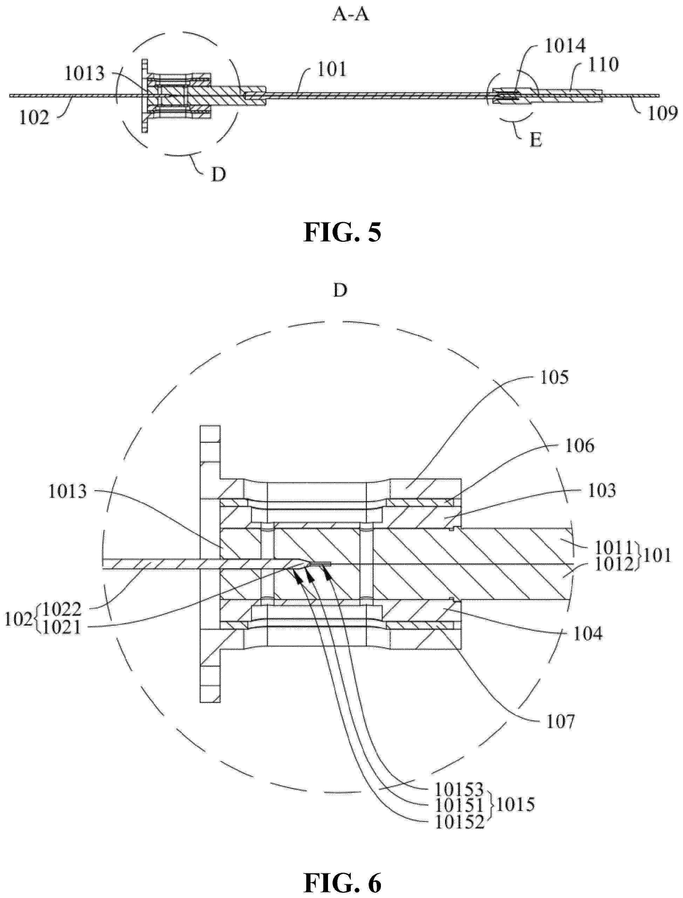

Please refer to FIG. 5, FIG. 6, and FIG. 8, and please refer to FIG. 1 together, in some embodiments of the present application, the winding device 10 further includes a first supporting seat 105, a first elastic member 106, and a second elastic member 107. The first supporting seat 105 is arranged at the first end 1013 and arranged on a periphery of the first bracket 103 and the second bracket 104 in a sleeving mode. The first elastic member 106 is mounted between the first supporting seat 105 and the first bracket 103. The second elastic member 107 is mounted between the first supporting seat 105 and the second bracket 104.

It should be noted that the first supporting seat 105 is a stable structure for supporting the first end 1013 of the winding needle 101. The position of the first supporting seat 105 is substantially stable and does not move along with the movement of the first needle body 1011 or the second needle body 1012. Specifically, when the first needle body 1011 moves in the axial direction of the winding needle 101 to complete the needle inserting operation, the first needle body 1011 will pass through the middle of the first supporting seat 105, and when the first needle body 1011 moves in place, the first bracket 103 firmly mounted on the first needle body 1011 will be located in the first supporting seat 105. Similarly, when the second needle body 1012 moves in the axial direction of the winding needle 101 to complete the needle inserting operation, the second needle body 1012 will pass through the middle of the second supporting seat 110, and when the second needle body 1012 moves in place, the second bracket 104 firmly mounted on the second needle body 1012 will be located in the second supporting seat 110. Thus, the first supporting seat 105 can be arranged on the periphery of the first bracket 103 and the second bracket 104 in the sleeving mode, and reliably support the first bracket 103, the second bracket 104, the first end 1013 of the first needle body 1011, and the first end 1013 of the second needle body 1012.

The first elastic member 106 is an elastic structure made of an elastic material. The material of the first elastic member 106 is not uniquely limited in this embodiment. For example, the first elastic member 106 may be made of rubber or latex. The first elastic member 106 is mounted between the first supporting seat 105 and the first bracket 103. In a possible implementation, the first elastic member 106 can be firmly mounted on the first supporting seat 105 by, but not limited to, bonding. At this time, when the first needle body 1011 moves in the axial direction of the winding needle 101 to perform the needle inserting or needle pulling operation, the first elastic member 106 does not move with the movement of the first needle body 1011; when the first needle body 1011 completes the needle inserting operation, the first elastic member 106 will elastically be connected to and tightly fit the first bracket 103 in an abutting mode, thereby achieving elastic abutting connection between the first supporting seat 105 and the first bracket 103. In another possible implementation, the first elastic member 106 can be firmly mounted on the first bracket 103 by, but not limited to, bonding. At this time, when the first needle body 1011 moves in the axial direction of the winding needle 101 to perform the needle inserting or needle pulling operation, the first elastic member 106 moves with the movement of the first needle body 1011; when the first needle body 1011 completes the needle inserting operation, the first elastic member 106 will be located in the first supporting seat 105 with the first bracket 103 and the first elastic member 106 will elastically be connected to and tightly fit the first supporting seat 105 in an abutting mode, thereby achieving elastic abutting connection between the first supporting seat 105 and the first bracket 103

The second elastic member 107 is an elastic structure made of an elastic material. The material of the second elastic member 107 is not uniquely limited in this embodiment. For example, the second elastic member 107 may be made of rubber or latex. The second elastic member 107 is mounted between the second supporting seat 110 and the second bracket 104. In a possible implementation, the second elastic member 107 can be firmly mounted on the second supporting seat 110 by, but not limited to, bonding. At this time, when the second needle body 1012 moves in the axial direction of the winding needle 101 to perform the needle inserting or needle pulling operation, the second elastic member 107 does not move with the movement of the second needle body 1012; when the second needle body 1012 completes the needle inserting operation, the second elastic member 107 will elastically be connected to and tightly fit the second bracket 104 in an abutting mode, thereby achieving elastic abutting connection between the second supporting seat 110 and the second bracket 104. In another possible implementation, the second elastic member 107 can be firmly mounted on the second bracket 104 by, but not limited to, bonding. At this time, when the second needle body 1012 moves in the axial direction of the winding needle 101 to perform the needle inserting or needle pulling operation, the second elastic member 107 moves with the movement of the second needle body 1012; when the second needle body 1012 completes the needle inserting operation, the second elastic member 107 will be located in the second supporting seat 110 with the second bracket 104 and the second elastic member 107 will elastically be connected to and tightly fit the second supporting seat 110 in an abutting mode, thereby achieving elastic abutting connection between the second supporting seat 110 and the second bracket 104.

By adopting the above solution, the first bracket 103, the second bracket 104, the first end 1013 of the first needle body 1011, and the first end 1013 of the second needle body 1012 can be reliably supported by the first supporting seat 105 to stabilize the position of the first end 1013 of the winding needle 101. Based on this, it is helpful to stabilize the rotation axis of the winding needle 101, thereby facilitating the smooth rotation of the winding needle 101 and the smooth winding operation of the winding needle 101.

On this basis, the first elastic member 106 is elastically connected between the first supporting seat 105 and the first bracket 103 in an abutting mode. Based on this, when the first push rod 102 is inserted into the first hole 1015 and the spacing between the first needle body 1011 and the second needle body 1012 changes, the first elastic member 106 can elastically press the first needle body 1011 in an abutting mode to stabilize the state of the first needle body 1011. Similarly, the second elastic member 107 is elastically connected between the second supporting seat 110 and the second bracket 104 in an abutting mode. Based on this, when the first push rod 102 is inserted into the first hole 1015 and the spacing between the first needle body 1011 and the second needle body 1012 changes, the second elastic member 107 can elastically press the second needle body 1012 in an abutting mode to stabilize the state of the second needle body 1012. Thus, the first elastic member 106 and/or the second elastic member 107 can jointly press the winding needle 101 to reduce the risk of the winding needle 101 jumping during the change of the circumference thereof, so as to enable the winding needle 101 to be stable and enable the winding needle 101 to rotate smoothly and perform the winding operation smoothly at the adjusted circumference, thereby effectively reducing the risk of poor quality of the electrode assembly 12 formed by winding when the winding needle 101 jumps and effectively improving the percent of pass of the electrode assembly 12 wound by the winding device 10.

Of course, in other possible implementations, only the first elastic member 106 or the second elastic member 107 may be arranged, which can also produce a similar effect to a certain extent.

Please refer to FIG. 2, FIG. 5, and FIG. 6, in some embodiments of the present application, the winding device 10 further includes a first driver 108. The first driver 108 is connected to an end of the first push rod 102 away from the winding needle 101 and configured to drive the first push rod 102 to reciprocate in the axial direction of the winding needle 101.

It should be noted that the first driver 108 may be, but is not limited to, a cylinder. The first driver 108 is arranged on an end side of the first push rod 102 away from the winding needle 101 and is connected to an end of the first push rod 102 away from the winding needle 101. This embodiment does not limit a connection method between the first driver 108 and the first push rod 102. The first driver 108 can be used to drive the first push rod 102 to reciprocate in the axial direction of the winding needle 101, so that the first push rod 102 is inserted into or pulled out of the first hole 1015.

By adopting the above solution, the first push rod 102 can be driven by the first driver 108 to reciprocate in the axial direction of the winding needle 101, so as to conveniently and quickly control the first push rod 102 to be inserted into or pulled out of the first hole 1015 while saving time and effort, and the moving stroke of the first push rod 102 in the first hole 1015 can be accurately controlled, thereby facilitating improving the convenience and accuracy of adjusting the circumference of the winding needle 101.

Please refer to FIG. 4, FIG. 5, and FIG. 6, in some embodiments of the present application, the first hole 1015 includes a first penetrating hole section 10152, the first adjusting hole section 10151, and a first accommodating hole section 10153 which are sequentially connected in the direction close to the second end 1014; the first push rod 102 has a first main body section 1022 and the first adjusting section 1021 arranged at an end of the first main body section 1022, and part of the first main body section 1022 is arranged in the first penetrating hole section 10152 in a penetrating mode.

It should be noted that the first push rod 102 is divided into the first main body section 1022 and the first adjusting section 1021 in an extension direction thereof. The first adjusting section 1021 is arranged at the end of the first main body section 1022 close to the winding needle 101. Based on this, when the first push rod 102 is inserted into the first hole 1015, the first adjusting section 1021 will be the part first inserted into the first hole 1015, so that the first adjusting section 1021 can cooperate with the first adjusting hole section 10151 to adjust the spacing between the first needle body 1011 and the second needle body 1012.

It should also be noted that the first hole 1015 can be divided into the first penetrating hole section 10152, the first adjusting hole section 10151, and the first accommodating hole section 10153 in the direction close to the second end 1014, and the first penetrating hole section 10152, the first adjusting hole section 10151, and the first accommodating hole section 10153 are connected in sequence.

In one possible implementation, the radial dimension of the first penetrating hole section 10152 remains unchanged in the direction close to the second end 1014, and the radial dimension of the first penetrating hole section 10152 is greater than or equal to the maximum radial dimension of the first adjusting hole section 10151. In another possible implementation, the radial dimension of the first penetrating hole section 10152 is gradually reduced in the direction close to the second end 1014, and the minimum radial dimension of the first penetrating hole section 10152 is greater than or equal to the maximum radial dimension of the first adjusting hole section 10151. Such arrangement can ensure that the first adjusting section 1021 can penetrate through the first penetrating hole section 10152 to be arranged in the first adjusting hole section 10151 in a penetrating mode, and can also ensure that part of the first main body section 1022 can be accommodated in the first penetrating hole section 10152, thereby effectively reducing the influence of the first main body section 1022 on the spacing between the first needle body 1011 and the second needle body 1012, so that the change in the spacing between the first needle body 1011 and the second needle body 1012 is mainly controlled by the cooperation between the first adjusting section 1021 and the first adjusting hole section 10151.

In one possible implementation, the radial dimension of the first accommodating hole section 10153 remains unchanged in the direction close to the second end 1014, and the radial dimension of the first accommodating hole section 10153 is less than or equal to the minimum radial dimension of the first adjusting hole section 10151. In another possible implementation, the radial dimension of the first accommodating hole section 10153 is gradually reduced in the direction close to the second end 1014, and the maximum radial dimension of the first accommodating hole section 10153 is less than or equal to the minimum radial dimension of the first adjusting hole section 10151. Such arrangement can facilitate the portion of the first adjusting section 1021 penetrating out of the first adjusting hole section 10151 to be accommodated in the first accommodating hole section 10153, and can also effectively reduce the influence of the portion of the first adjusting section 1021 penetrating out of the first adjusting hole section 10151 on the spacing between the first needle body 1011 and the second needle body 1012, so that the change in the spacing between the first needle body 1011 and the second needle body 1012 is mainly controlled by the cooperation between the first adjusting section 1021 and the first adjusting hole section 10151.

By adopting the above solution, the first adjusting section 1021 of the first push rod 102 is arranged at the end of the first main body section 1022, so that a functional part of the first push rod 102 for adjusting the spacing between the first needle body 1011 and the second needle body 1012 is concentrated at the end thereof. Based on this, the first adjusting section 1021 can be inserted into the first hole 1015 prior to other parts of the first push rod 102, and the first adjusting section 1021 can be pulled out of the first hole 1015 after other parts of the first push rod 102, thereby effectively reducing the influence of other parts of the first push rod 102 on the spacing between the first needle body 1011 and the second needle body 1012, so that the change in the spacing between the first needle body 1011 and the second needle body 1012 is mainly controlled by the cooperation between the first adjusting section 1021 and the first adjusting hole section 10151. Correspondingly, the first hole 1015 can accommodate, through the first penetrating hole section 10152, the portion of the first main body section 1022 inserted into the first hole 1015, and can accommodate, through the first accommodating hole section 10153, the portion of the first adjusting section 1021 penetrating out of the first adjusting hole section 10151, thereby effectively reducing the influence of the portion of the first main body section 1022 inserted into the first hole 1015 on the spacing between the first needle body 1011 and the second needle body 1012, and effectively reducing the influence of the portion of the first adjusting section 1021 penetrating out the first adjusting hole section 10151 on the spacing between the first needle body 1011 and the second needle body 1012, so that the change in the spacing between the first needle body 1011 and the second needle body 1012 is mainly controlled by the cooperation between the first adjusting section 1021 and the first adjusting hole section 10151. Thus, the factors affecting the change of the spacing between the first needle body 1011 and the second needle body 1012 can be reduced, which can help improve the adjustment accuracy.

Please refer to FIG. 1, FIG. 5, and FIG. 6, in some embodiments of the present application, the first adjusting section 1021 is a wedge-shaped structure, the first adjusting hole section 10151 is a wedge-shaped hole, and the first adjusting section 1021 and the first adjusting hole section 10151 are matched in a wedge shape.

It should be noted that the first adjusting section 1021 is a wedge-shaped structure, that is, the shape of the first adjusting section 1021 is a wedge shape. The wedge-shaped refers to a shape that is thick at one end and narrow at the other end, with a transitional change in the middle, such as a cone. Correspondingly, the first adjusting hole section 10151 is a wedge-shaped hole, so that the first adjusting section 1021 and the first adjusting hole section 10151 are matched in a wedge shape.

By adopting the above solution, the first adjusting section 1021 and the first adjusting hole section 10151 can be matched in a wedge shape, so that by adjusting the matching position of the first adjusting section 1021 and the first adjusting hole section 10151, the spacing between the first needle body 1011 and the second needle body 1012 can be accurately adjusted, and the circumference of the winding needle 101 can be accurately adjusted. Furthermore, since surface contact can be formed between the first adjusting section 1021 and the first adjusting hole section 10151, the contact between the first adjusting section 1021 and the first adjusting hole section 10151 can be smooth, so that the spacing between the first needle body 1011 and the second needle body 1012 can change smoothly and remain stable after adjustment, thereby enabling the winding needle 101 to rotate smoothly and perform the winding operation smoothly at the adjusted circumference, which can effectively reduce the risk of poor quality of the electrode assembly 12 formed by winding when the circumference of the winding needle 101 changes during the winding operation, and can effectively improve the percent of pass of the electrode assembly 12 wound by the winding device 10.

Please refer to FIG. 4, FIG. 5, and FIG. 7, and please refer to FIG. 1 together, in some embodiments of the present application, the first needle body 1011 and the second needle body 1012 jointly form a second hole 1016 at the second end 1014, and at least part of the second hole 1016 is a second adjusting hole section 10161. A radial dimension of the second adjusting hole section 10161 is gradually reduced in the direction close to the first end 1013. The winding device 10 further includes a second push rod 109. The second push rod 109 is inserted into the second hole 1016 and can reciprocate in the axial direction of the winding needle 101. The second push rod 109 has a second adjusting section 1091 matched with the second adjusting hole section 10161.

It should be noted that the winding needle 101 is provided with the second hole 1016 in an end surface of the second end 1014. A part of the first hole 1016 is formed in the first needle body 1011, and another part of the first hole 1016 is formed in the second needle body 1012. The second hole 1016 is defined by the first needle body 1011 and the second needle body 1012 together. Part or all of the second hole 1016 is the second adjusting hole section 10161. The second adjusting hole section 10161 can be a circular hole, a rectangular hole, or a hole in other shapes. When the second adjusting hole section 10161 is a circular hole, a radial direction of the second adjusting hole section 10161 refers to a diameter direction of the second adjusting hole section 10161; when the second adjusting hole section 10161 is a non-circular hole, the radial direction of the second adjusting hole section 10161 refers to a direction passing through a central axis of the second adjusting hole section 10161 and perpendicular to the central axis of the second adjusting hole section 10161. The radial dimension of the second adjusting hole section 10161 is gradually reduced in the direction close to the first end 1013. In other words, the radial dimension of the second adjusting hole section 10161 is gradually expanded in the direction away from the first end 1013.

It should also be noted that the second push rod 109 is a rod-shaped structure for adjusting the spacing between the first needle body 1011 and the second needle body 1012 in cooperation with the first push rod 102, that is, a rod-shaped structure for adjusting the circumference of the winding needle 101 in cooperation with the first push rod 102. This embodiment does not limit the shape, dimension, material, etc. of the second push rod 109.

One end of the second push rod 109 can be inserted into and pulled out of the second hole 1016. The second push rod 109 can be driven manually or electrically to achieve reciprocation in the axial direction of the winding needle 101. The second push rod 109 has the second adjusting section 1091, and the second adjusting section 1091 corresponds to and cooperates with the second adjusting hole section 10161. When the second push rod 109 reciprocates in the axial direction of the winding needle 101, the second adjusting section 1091 will also reciprocate relative to the second adjusting hole section 10161. Since the radial dimension of the second adjusting hole section 10161 is gradually reduced in the direction close to the first end 1013, when the second adjusting section 1091 moves relative to the second adjusting hole section 10161 in the direction close to the first end 1013, the second adjusting section 1091 will move to an area where the radial dimension of the second adjusting hole section 10161 is gradually reduced. At this time, as the second adjusting section 1091 moves, the second adjusting section 1091 will gradually push the first needle body 1011 and the second needle body 1012 in an abutting mode, so that the spacing between the first needle body 1011 and the second needle body 1012 gradually increases, and the circumference of the winding needle 101 gradually increases. On the contrary, when the second adjusting section 1091 is moved relative to the second adjusting hole section 10161 in the direction away from the first end 1013, the second adjusting section 1091 will moves to the area where the radial dimension of the second adjusting hole section 10161 gradually increases. At this time, as the second adjusting section 1091 moves, the second adjusting section 1091 will gradually reduce abutting pushing on the first needle body 1011 and the second needle body 1012, so that the spacing between the first needle body 1011 and the second needle body 1012 gradually decreases, and the circumference of the winding needle 101 gradually decreases.

The action of the second push rod 109 is consistent with the action of the first push rod 102. Specifically, when the first push rod 102 is pulled out of the first hole 1015, the second push rod 109 is also pulled out of the second hole 1016. When the first push rod 102 is inserted into the first hole 1015, the second push rod 109 is also inserted into the second hole 1016, and the adjustment amount of the spacing between the first needle body 1011 and the second needle body 1012 by the second push rod 109 at the second end 1014 is basically equal to the adjustment amount of the spacing between the first needle body 1011 and the second needle body 1012 by the first push rod 102 at the first end 1013. Such arrangement can make the amounts of changes in the circumference of the winding needle 101 at the first end 1013 and the second end 1014 tend to be consistent, and can make the amounts of changes in the entire circumference of the winding needle 101 tend to be consistent, thereby facilitating the winding needle 101 to form the electrode assembly 12 by winding with a circumference with the adjustment amounts consistent at various locations, which can effectively reduce the risk of poor quality of the electrode assembly 12 formed by the winding when the circumference has inconsistent adjustment amounts at various locations, and effectively improve the percent of pass of the electrode assembly 12 wound by the winding device 10.

By adopting the above solution, the first push rod 102 can be inserted into and pulled out of the first hole 1015 at the first end 1013 to adjust the spacing between the first needle body 1011 and the second needle body 1012. At the same time, the second push rod 109 can maintain the same movement as the first push rod 102 and be inserted into and pulled out of the second hole 1016 at the second end 1014 to also participate in adjusting the spacing between the first needle body 1011 and the second needle body 1012. Based on this, the first push rod 102 and the second push rod 109 can jointly adjust the spacing between the first needle body 1011 and the second needle body 1012, jointly adjust the circumference of the winding needle 101 and can cause the adjustment amount of the spacing between the first needle body 1011 and the second needle body 1012 by the second push rod 109 at the second end 1014 to be consistent with the adjustment amount of the spacing between the first needle body 1011 and the second needle body 1012 by the first push rod 102 at the first end 1013, thereby facilitating the winding needle 101 to form the electrode assembly 12 by winding at a circumference with the adjustment amounts consistent at various locations, which can effectively reduce the risk of poor quality of the electrode assembly 12 formed by winding when the circumference has inconsistent adjustment amounts at various locations, and can effectively improve the percent of pass of the electrode assembly 12 wound by the winding device 10.

Of course, in other possible implementations, other structural designs may be used to adjust the spacing between the first needle body 1011 and the second needle body 1012 at the second end 1014, which is not limited in this embodiment. Even when the second end 1014 of the winding needle 101 has no any restrictions, and the adjustment of the spacing between the first needle body 1011 and the second needle body 1012 by the first push rod 102 at the first end 1013 can synchronously drive the second end 1014 to make the same adjustment, the second end 1014 of the winding needle 101 can also omit the structure for adjusting the spacing between the first needle body 1011 and the second needle body 1012 at the second end 1014.

Please refer to FIG. 4, FIG. 5, and FIG. 7, in some embodiments of the present application, the width of the second adjusting section 1091 is gradually reduced in the direction close to the first end 1013.

It should be noted that the width of the second adjusting section 1091 refers to the dimension of the second adjusting section 1091 in the direction of the spacing between the first needle body 1011 and the second needle body 1012. Corresponding to the design that the radial dimension of the second adjusting hole section 10161 is gradually reduced in the direction close to the first end 1013, the width of the second adjusting section 1091 is also gradually reduced in the direction close to the first end 1013. In other words, the width of the second adjusting section 1091 is gradually expanded in the direction away from the first end 1013.

Based on this, when it is necessary to adjust the spacing between the first needle body 1011 and the second needle body 1012 and the circumference of the winding needle 101, the second adjusting section 1091 can be controlled to move relative to the second adjusting hole section 10161 in the direction close to the first end 1013, so that the area with a larger width of the second adjusting section 1091 moves to the area where the radial dimension of the second adjusting hole section 10161 gradually decreases. At this time, as the second adjusting section 1091 moves, the second adjusting section 1091 will gradually push the first needle body 1011 and the second needle body 1012 in an abutting mode, so that the spacing between the first needle body 1011 and the second needle body 1012 gradually increases, and the circumference of the winding needle 101 gradually increases. On the contrary, the second adjusting section 1091 can be controlled to move relative to the second adjusting hole section 10161 in the direction away from the first end 1013, or even be pulled out of the second hole 1016, so that the area with a larger width of the second adjusting section 1091 moves to the area where the radial dimension of the second adjusting hole section 10161 gradually increases. At this time, as the second adjusting section 1091 moves, the second adjusting section 1091 will gradually reduce abutting pushing on the first needle body 1011 and the second needle body 1012, so that the spacing between the first needle body 1011 and the second needle body 1012 gradually decreases, and the circumference of the winding needle 101 gradually decreases.

Thus, by adopting the above solution, the second adjusting section 1091 can be controlled to move relative to the second adjusting hole section 10161 to adjust the contact and cooperation between different width areas of the second adjusting section 1091 and different radial dimension areas of the second adjusting hole section 10161, thereby adjusting the abutting pushing effect of the second adjusting section 1091 on the first needle body 1011 and the second needle body 1012, adjusting the spacing between the first needle body 1011 and the second needle body 1012, and adjusting the circumference of the winding needle 101. Furthermore, based on the data variation trend of the radial dimension of the second adjusting hole section 10161 in the axial direction of the winding needle 101 and the data variation trend of the width of the second adjusting section 1091 in the axial direction of the winding needle 101, the relationship between the moving stroke of the second adjusting section 1091 in the axial direction of the winding needle 101 and the spacing between the first needle body 1011 and the second needle body 1012, as well as the relationship between the moving stroke of the second adjusting section 1091 in the axial direction of the winding needle 101 and the circumference of the winding needle 101 can also be estimated. This makes it possible to precisely adjust the spacing between the first needle body 1011 and the second needle body 1012 and the circumference of the winding needle 101 by controlling the moving stroke of the second adjusting section 1091 in the axial direction of the winding needle 101, thereby helping to improve the adjustment accuracy.

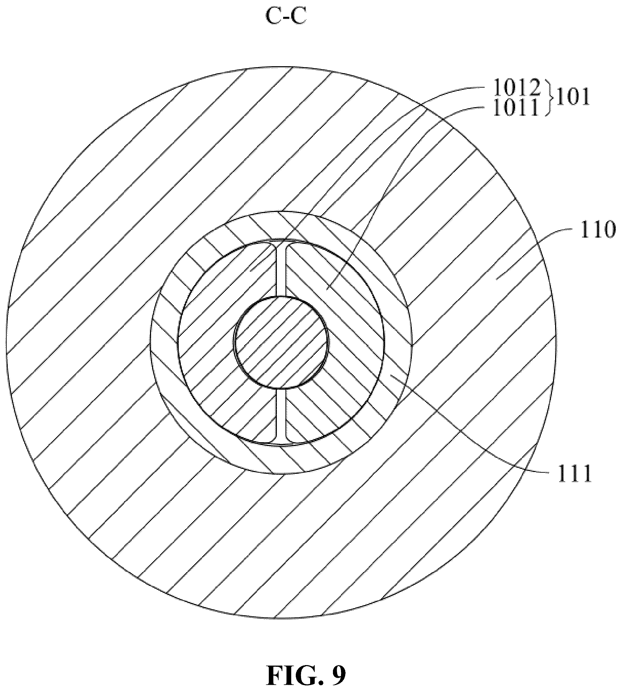

Please refer to FIG. 4, FIG. 5, FIG. 7, and FIG. 9, in some embodiments of the present application, the winding device 10 further includes a second supporting seat 110. The second supporting seat 110 is provided with a third hole 1101 in a side close to the winding needle 101, where a fourth through hole 1102 is formed in a bottom of the third hole 1101, the second end 1014 of the winding needle 101 is inserted into the third hole 1101, and the second push rod 109 is arranged in the fourth hole 1102 in a penetrating mode.

It should be noted that the second supporting seat 110 is a stable structure for supporting the second end 1014 of the winding needle 101. The position of the second supporting seat 110 is substantially stable and does not move along with the movement of the first needle body 1011 or the second needle body 1012. The third hole 1101 is formed in a side of the second supporting seat 110 close to the winding needle 101. Based on this, when the first needle body 1011 moves in the axial direction of the winding needle 101 to complete the needle inserting operation, the end of the first needle body 1011 will be inserted into the third hole 1101 of the second supporting seat 110. Similarly, when the second needle body 1012 moves in the axial direction of the winding needle 101 to complete the needle inserting operation, the end of the second needle body 1012 will also be inserted into the third hole 1101 of the second supporting seat 110. Therefore, the second supporting seat 110 can reliably support the second end 1014 of the first needle body 1011 and the second end 1014 of the second needle body 1012.

The second supporting seat 110 is further provided with the fourth hole 1102 in the bottom of the third hole 1101. The fourth hole 1102 is arranged in a penetrating mode in a direction away from the winding needle 101. The second push rod 109 can be arranged in the fourth hole 1102 in a penetrating mode to be inserted into and pulled out of the second hole 1016. Even when the second push rod 109 is pulled out of the second hole 1016, the second push rod 109 can still be accommodated in the fourth hole 1102 without being pulled out of the fourth hole 1102. Thus, the second push rod 109 can be supported and positioned by the second supporting seat 110, so that the second push rod 109 can be accurately inserted into and pulled out of the second hole 1016.

By adopting the above solution, the second end 1014 of the first needle body 1011 and the second end 1014 of the second needle body 1012 can be reliably supported by the second supporting seat 110 to stabilize the position of the second end 1014 of the winding needle 101. Based on this, it is helpful to stabilize the rotation axis of the winding needle 101, thereby facilitating the smooth rotation of the winding needle 101 and the smooth winding operation of the winding needle 101. The second push rod 109 can also be supported and positioned by the second supporting seat 110, so that the second push rod 109 can be accurately inserted into and pulled out of the second hole 1016.

Please refer to FIG. 5, FIG. 7, and FIG. 9, and please refer to FIG. 1 together, in some embodiments of the present application, the winding deice 10 further includes a third elastic member 111. The third elastic member 111 is mounted in the third hole 1101 and arranged on a periphery of the second end 1014 of the winding needle 101 in a sleeving mode.

It should be noted that the third elastic member 111 is an elastic structure made of an elastic material. The material of the third elastic member 111 is not uniquely limited in this embodiment. For example, the third elastic member 111 may be made of rubber or latex. The third elastic member 111 is mounted in the third hole 1101. The third elastic member 111 may be firmly mounted on the second supporting seat 110 by, but not limited to, bonding. The third elastic member 111 is in the shape of a closed loop or an open loop. When the second end 1014 of the winding needle 101 is inserted into the third hole 1101, the third elastic member 111 is arranged on the periphery of the second end 1014 of the winding needle 101 in a sleeving mode, and is elastically connected to and tightly fits the second end 1014 of the winding needle 101 in an abutting mode, thereby achieving elastic abutting connection between the second supporting seat 110 and the second end 1014 of the winding needle 101.

By adopting the above solution, when the second end 1014 of the winding needle 101 is inserted into the third hole 1101, the third elastic member 111 can be elastically connected between a hole wall of the third hole 1101 and the second end 1014 of the winding needle 101 in an abutting mode. Based on this, when the second push rod 109 is inserted into the second hole 1016 and the spacing between the first needle body 1011 and the second needle body 1012 changes, the third elastic member 111 can elastically press the second end 1014 of the winding needle 101 in an abutting mode to stabilize the state of the second end 1014 of the winding needle 101. Thus, the risk of the winding needle 101 jumping during the change of the circumference thereof can be effectively reduced, so as to enable the winding needle 101 to be stable and enable the winding needle 101 to rotate smoothly and perform the winding operation smoothly at the adjusted circumference, thereby effectively reducing the risk of poor quality of the electrode assembly 12 formed by winding when the winding needle 101 jumps and effectively improving the percent of pass of the electrode assembly 12 wound by the winding device 10. Furthermore, by mounting the third elastic member 111 in the third hole 1101, during the process of inserting the second end 1014 of the winding needle 101 into the third hole 1101, the insertion resistance of the second end 1014 of the winding needle 101 can be effectively reduced by elastic deformation of the third elastic member 111.

Please refer to FIG. 2, FIG. 5, and FIG. 7, in some embodiments of the present application, the winding device 10 further includes a second driver 112. The second driver 112 is connected to an end of the second push rod 109 away from the winding needle 101 and configured to drive the second push rod 109 to reciprocate in the axial direction of the winding needle 101.

It should be noted that the second driver 112 may be, but is not limited to, a cylinder. The second driver 112 is arranged on an end side of the second push rod 109 away from the winding needle 101 and is connected to an end of the second push rod 109 away from the winding needle 101. This embodiment does not limit a connection method between the second driver 112 and the second push rod 109. The second driver 112 can be used to drive the second push rod 109 to reciprocate in the axial direction of the winding needle 101, so that the second push rod 109 is inserted into or pulled out of the second hole 1016.

By adopting the above solution, the second push rod 109 can be driven by the second driver 112 to reciprocate in the axial direction of the winding needle 101, so as to conveniently and quickly control the second push rod 109 to be inserted into or pulled out of the second hole 1016 while saving time and effort, and the moving stroke of the second push rod 109 in the second hole 1016 can be accurately controlled, thereby facilitating improving the convenience and accuracy of adjusting the circumference of the winding needle 101.

Please refer to FIG. 4, FIG. 5, and FIG. 7, in some embodiments of the present application, the second hole 1016 includes a second penetrating hole section 10162, the second adjusting hole section 10161, and a second accommodating hole section 10163 which are sequentially connected in the direction close to the first end 1013. The second push rod 109 has a second main body section 1092 and the second adjusting section 1091 arranged at an end of the second main body section 1092, and part of the second main body section 1092 is arranged in the second penetrating hole section 10162 in a penetrating mode.

It should be noted that the second push rod 109 is divided into the second main body section 1092 and the second adjusting section 1091 in an extension direction thereof. The second adjusting section 1091 is arranged at the end of the second main body section 1092 close to the winding needle 101. Based on this, when the second push rod 109 is inserted into the second hole 1016, the second adjusting section 1091 will be the part first inserted into the second hole 1016, so that the second adjusting section 1091 can cooperate with the second adjusting hole section 10161 to adjust the spacing between the first needle body 1011 and the second needle body 1012.

It is further to be noted that the second hole 1016 can be divided into the second penetrating hole section 10162, the second adjusting hole section 10161, and the second accommodating hole section 10163 in the direction close to the first end 1013, and the second penetrating hole section 10162, the second adjusting hole section 10 16 1, and the second accommodating hole section 10163 are connected in sequence.

In one possible implementation, the radial dimension of the second penetrating hole section 10162 remains unchanged in the direction close to the first end 1013, and the radial dimension of the second penetrating hole section 10162 is greater than or equal to the maximum radial dimension of the second adjusting hole section 10161. In another possible implementation, the radial dimension of the second penetrating hole section 10162 is gradually reduced in the direction close to the first end 1013, and the minimum radial dimension of the second penetrating hole section 10162 is greater than or equal to the maximum radial dimension of the second adjusting hole section 10161. Such arrangement can ensure that the second adjusting section 1091 can penetrate through the second penetrating hole section 10162 to be arranged in the second adjusting hole section 10161 in a penetrating mode, and can also ensure that part of the second main body section 1092 can be accommodated in the second penetrating hole section 10162, thereby effectively reducing the influence of the second main body section 1092 on the spacing between the first needle body 1011 and the second needle body 1012, so that the change in the spacing between the first needle body 1011 and the second needle body 1012 at the second end 1014 is mainly controlled by the cooperation between the second adjusting section 1091 and the second adjusting hole section 10161.

In one possible implementation, the radial dimension of the second accommodating hole section 10163 remains unchanged in the direction close to the first end 1013, and the radial dimension of the second accommodating hole section 10163 is less than or equal to the minimum radial dimension of the second adjusting hole section 10161. In another possible implementation, the radial dimension of the second accommodating hole section 10163 is gradually reduced in the direction close to the first end 1013, and the maximum radial dimension of the second accommodating hole section 10163 is less than or equal to the minimum radial dimension of the second adjusting hole section 10161. Such arrangement can facilitate the portion of the second adjusting section 1091 penetrating out of the second adjusting hole section 10161 to be accommodated in the second accommodating hole section 10163, and can also effectively reduce the influence of the portion of the second adjusting section 1091 penetrating out of the second adjusting hole section 10161 on the spacing between the first needle body 1011 and the second needle body 1012, so that the change in the spacing between the first needle body 1011 and the second needle body 1012 at the second end 1014 is mainly controlled by the cooperation between the second adjusting section 1091 and the second adjusting hole section 10161.

By adopting the above solution, the second adjusting section 1091 of the second push rod 109 is arranged at the end of the second main body section 1092, so that a functional part of the second push rod 109 for adjusting the spacing between the first needle body 1011 and the second needle body 1012 is concentrated at the end thereof. Based on this, the second adjusting section 1091 can be inserted into the second hole 1016 prior to other parts of the second push rod 109, and the second adjusting section 1091 can be pulled out of the second hole 1016 after other parts of the second push rod 109, thereby effectively reducing the influence of other parts of the second push rod 109 on the spacing between the first needle body 1011 and the second needle body 1012, so that the change in the spacing between the first needle body 1011 and the second needle body 1012 at the second end 1014 is mainly controlled by the cooperation between the second adjusting section 1091 and the second adjusting hole section 10161. Correspondingly, the second hole 1016 can accommodate, through the second penetrating hole section 10162, the portion of the second main body section 1092 inserted into the second hole 1016, and can accommodate, through the second accommodating hole section 10163, the portion of the second adjusting section 1091 penetrating out of the second adjusting hole section 10161, thereby effectively reducing the influence of the portion of the second main body section 1092 inserted into the second hole 1016 on the spacing between the first needle body 1011 and the second needle body 1012, and effectively reducing the influence of the portion of the second adjusting section 1091 penetrating out the second adjusting hole section 10161 on the spacing between the first needle body 1011 and the second needle body 1012, so that the change in the spacing between the first needle body 1011 and the second needle body 1012 at the second end 1014 is mainly controlled by the cooperation between the second adjusting section 1091 and the second adjusting hole section 10161. Thus, the factors affecting the change of the spacing between the first needle body 1011 and the second needle body 1012 can be reduced, which can help improve the adjustment accuracy.

Please refer to FIG. 1, FIG. 5, and FIG. 7, in some embodiments of the present application, the second adjusting section 1091 is a wedge-shaped structure, the second adjusting hole section 10161 is a wedge-shaped hole, and the second adjusting section 1091 and the second adjusting hole section 10161 are matched in a wedge shape.

It should be noted that the second adjusting section 1091 is a wedge-shaped structure, that is, the shape of the second adjusting section 1091 is in a wedge shape. Correspondingly, the second adjusting hole section 10161 is a wedge-shaped hole, so that the second adjusting section 1091 and the second adjusting hole section 10161 are matched in a wedge shape.

By adopting the above solution, the second adjusting section 1091 and the second adjusting hole section 10161 can be matched in a wedge shape, so that by adjusting the matching position of the second adjusting section 1091 and the second adjusting hole section 10161, the spacing between the first needle body 1011 and the second needle body 1012 can be accurately adjusted, and the circumference of the winding needle 101 can be accurately adjusted. Furthermore, since surface contact can be formed between the second adjusting section 1091 and the second adjusting hole section 10161, the contact between the second adjusting section 1091 and the second adjusting hole section 10161 can be smooth, so that the spacing between the first needle body 1011 and the second needle body 1012 can change smoothly and remain stable after adjustment, thereby enabling the winding needle 101 to rotate smoothly and perform the winding operation smoothly at the adjusted circumference, which can effectively reduce the risk of poor quality of the electrode assembly 12 formed by winding when the circumference of the winding needle 101 changes during the winding operation, and can effectively improve the percent of pass of the electrode assembly 12 wound by the winding device 10.

Please refer to FIG. 1, FIG. 2, and FIG. 10, some embodiments of the present application provide a winding system, and the winding system includes the winding device 10 provided in the embodiment of the present application.

By adopting the above solution, the winding system can form an electrode assembly 12 by winding of the winding device 10 provided in the embodiment of the present application, and when it is found that the tab misalignment phenomenon occurs in a previous electrode assembly 12 wound by the winding device 10, the circumference of the winding needle 101 of the winding device 10 can be adjusted according to the tab misalignment amount of the previous electrode assembly 12, and then the adjusted winding device 10 continues winding to form a next electrode assembly 12 to reduce the tab misalignment amount or even eliminate the tab misalignment phenomenon, thereby effectively improving the production efficiency and product quality of the winding operation and effectively reducing the cost loss of the winding operation.

Please refer to FIG. 1, FIG. 2, and FIG. 10, in some embodiments of the present application, the winding system is configured to wind a first electrode plate 20, a separator 40, and a second electrode plate 30 to form the electrode assembly 12, and the winding system further includes a first detection device 60, configured to detect tabs of the first electrode plate 20 and/or the second electrode plate 30.

It should be noted that the polarities of the first electrode plate 20 and the second electrode plate 30 are opposite, one of the first electrode plate 20 and the second electrode plate 30 is a positive electrode plate, and the other one of the first electrode plate 20 and the second electrode plate 30 is a negative electrode plate. The first electrode plate 20 and the second electrode plate 30 are both continuous electrode plates, and the separator 40 is a continuous separator. Two separators 40 are arranged. Before winding, one separator 40 is arranged between the first electrode plate 20 and the second electrode plate 30, and the other separator 40 is arranged on a side of the first electrode plate 20 facing away from the second electrode plate 30, or arranged on a side of the second electrode plate 30 facing away from the first electrode plate 20. Based on this, during winding, the winding device 10 can wind the first electrode plate 20, the separators 40, and the second electrode plate 30 to form the electrode assembly 12, and the two separators 40 can separate the first electrode plate 20 and the second electrode plate 30 to prevent a short circuit caused when the first electrode plate 20 and the second electrode plate 30 are in direct contact with each other. Each separator 40 has a plurality of pores through which active ions (e.g., lithium ions) generated by the first electrode plate 20 and the second electrode plate 30 can freely penetrate.

It should also be noted that, in a possible implementation, the winding system is provided with a first detection device 60, and the first detection device 60 is arranged on a conveying path of the first electrode plate 20, and is used to identify and detect the tab of the first electrode plate 20 when the tab of the first electrode plate 20 passes through it. In this way, it is convenient to detect whether there is a tab misalignment phenomenon in the first electrode plate 20.

In another possible implementation, the winding system is provided with a first detection device 60, and the first detection device 60 is arranged on a conveying path of the second electrode plate 30, and is used to identify and detect the tab of the second electrode plate 30 when the tab of the second electrode plate 30 passes through it. In this way, it is convenient to detect whether there is a tab misalignment phenomenon in the second electrode plate 30.

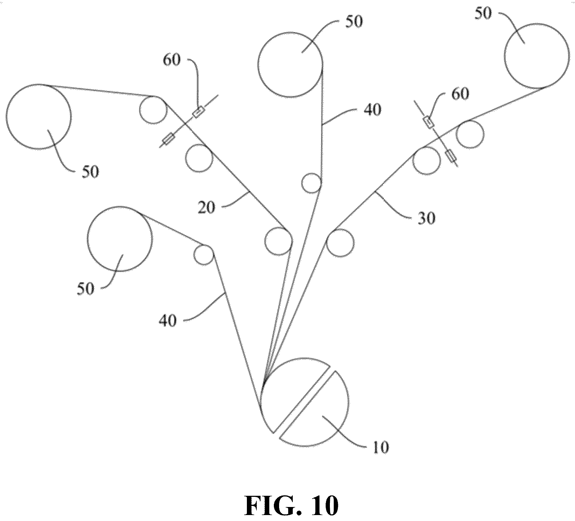

As shown in FIG. 10, in another possible implementation, the winding system is provided with two first detection devices 60. One of the first detection devices 60 is arranged on the conveying path of the first electrode plate 20, and is used to identify and detect the tab of the first electrode plate 20 when the tab of the first electrode plate 20 passes through it. Another first detection device 60 is arranged on the conveying path of the second electrode plate 30, and is used to identify and detect the tab of the second electrode plate 30 when the tab of the second electrode plate 30 passes through it. In this way, it is convenient to detect whether there is a tab misalignment phenomenon in the first electrode plate 20 and the second electrode plate 30.

By adopting the above solution, the first detection device 60 can be used to identify and detect the tab of the first electrode plate 20 to detect whether the first electrode plate 20 has the tab misalignment phenomenon, and/or identify and detect the tab of the second electrode plate 30 to detect whether the second electrode plate 30 has the tab misalignment phenomenon. Based on this, the tab misalignment amount of the current electrode assembly 12 can be detected in real time while the winding device 10 forms the electrode assembly 12 by winding, so that the winding device 10 can adjust the circumference of the winding needle 101 subsequently according to the tab misalignment amount of the previous electrode assembly 12 and then forms the next electrode assembly 12 by winding, thereby timely adjusting the tab misalignment amount of the next electrode assembly 12, effectively improving the production efficiency and product quality of the winding operation, and effectively reducing the cost loss of the winding operation.

Please refer to FIG. 1 and FIG. 10, in some embodiments of the present application, the winding system further includes four unwinding devices 50 arranged in sequence in a circumferential direction of the winding device 10. The four unwinding devices 50 are used to convey the first electrode plate 20, the second electrode plate 30, and the two separators 40 to the winding device 10, respectively.

It should be noted that the four unwinding devices 50 are sequentially arranged in the circumferential direction of the winding device 10. The four unwinding devices 50 may have the same structure or different structures, which is not limited in this embodiment. The specific structure of the unwinding device 50 is not limited in this embodiment.

In the four unwinding devices 50, one unwinding device 50 is used to convey a continuous first electrode plate 20 to the winding device 10, one unwinding device 50 is used to convey a continuous second electrode plate 30 to the winding device 10, and the remaining two unwinding devices 50 are respectively used to convey two continuous separators 40 to the winding device 10. Based on this, the electrode plates can be automatically conveyed, and it can be convenient for the winding device 10 to wind the first electrode plate 20, the separator 40, and the second electrode plate 30 to form the electrode assembly 12, thereby effectively improving the production efficiency of the winding operation.

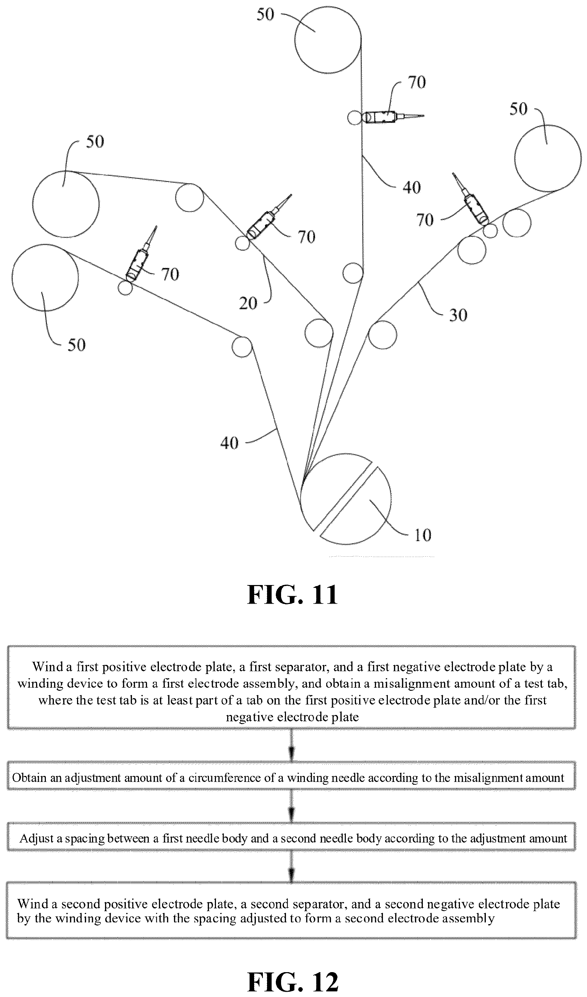

Please refer to FIG. 1 and FIG. 11, in some embodiments of the present application, the winding system further includes a second detection device 70 for detecting the thickness of the first electrode plate 20 and/or the second electrode plate 30 and/or the separator 40.

It should be noted that one second detection device 70 may be arranged to detect the thickness of one of the first electrode plate 20, the second electrode plate 30, and the two separators 40. Two second detection devices 70 may be arranged to detect the thicknesses of two of the first electrode plate 20, the second electrode plate 30, and the two separators 40. Three second detection devices 70 may be arranged to detect the thicknesses of three of the first electrode plate 20, the second electrode plate 30, and the two separators 40. As shown in FIG. 11, four second detection devices 70 may be arranged to detect the thicknesses of the first electrode plate 20, the second electrode plate 30, and the two separators 40.

Since the thickness change is one of the factors that cause the misalignment of the tabs, by adopting the above solution, the thickness change of at least one of the first electrode plate 20, the second electrode plate 30, and the two separators 40 can be detected by the second detection device 70, so as to estimate the situation of tab misalignment of the electrode assembly 12 currently formed by winding. This makes it easier for the winding device 10 to adjust the circumference subsequently according to the situation of tab misalignment of the previous electrode assembly 12, and then perform winding to form the next electrode assembly 12, so that the situation of tab misalignment of the next electrode assembly 12 can be adjusted in time, which can effectively improve the production efficiency and product quality of the winding operation and effectively reduce the cost loss of the winding operation.

Please refer to FIG. 12, some embodiments of the present application provide a winding method, and the winding method is implemented through the winding device 10 provided in the embodiment of the present application. Please refer to FIG. 1, FIG. 5, FIG. 6, FIG. 7, and FIG. 10 together, the winding method includes the following steps:
S1: Winding a first positive electrode plate, a first separator, and a first negative electrode plate by the winding device 10 to form a first electrode assembly, and obtaining a misalignment amount of a test tab, where the test tab is at least a part of a tab on the first positive electrode plate and/or the first negative electrode plate. It should be noted that the first positive electrode plate has a positive electrode tab 122, and the first negative electrode plate has a negative electrode tab 123. At least parts of the positive electrode tabs 122 and the negative electrode tabs 123 are selected as the test tab. The test tab can be all the positive electrode tab 122, all the negative electrode tab 123, or some of the positive electrode tab 122 and some of the negative electrode tab 123, which is not limited in this embodiment. When the winding device 10 winds the first positive electrode plate, the first separator, and the first negative electrode plate to form the first electrode assembly, a relevant detection device (for example, the first detection device 60 provided in the embodiment of the present application) can measure the misalignment amount of the test tab.
S2: Obtaining an adjustment amount of a circumference of the winding needle 101 according to the misalignment amount. It should be noted that, according to the misalignment amount of the test tab measured in step S1, the relevant device (e.g., a terminal system) can calculate the adjustment amount of the circumference of the winding needle 101.
S3: Adjusting a spacing between the first needle body 1011 and the second needle body 1012 according to the adjustment amount. It should be noted that step S3 is performed when the first electrode assembly is completely wound and transferred from the winding device 10. At this time, the winding needle 101 of the winding device 10 is in an idle state. According to the adjustment amount of the circumference of the winding needle 101 calculated in step S2, the winding device 10 can adjust the spacing between the first needle body 1011 and the second needle body 1012 through the first push rod 102 and the second push rod 109 until the circumference of the winding needle 101 is adjusted to a desired value.
S4: Winding a second positive electrode plate, a second separator, and a second negative electrode plate by the winding device 10 with the spacing adjusted to form a second electrode assembly. It should be noted that the winding device 10 can continue the winding operation through the winding needle 101 with the circumference adjusted to wind the second positive electrode plate, the second separator, and the second negative electrode plate to form the second electrode assembly, thereby adjusting the tab position of the second electrode assembly, reducing the tab misalignment amount, and even eliminating the tab misalignment phenomenon. The first electrode assembly and the second electrode assembly may refer to any two adjacently wound electrode assemblies 12, the first electrode assembly refers to a previous electrode assembly 12 formed by winding, and the second electrode assembly refers to a next electrode assembly 12 formed by winding. Furthermore, the first electrode assembly and the second electrode assembly do not limit that only two electrode assemblies 12 are formed. As long as the second electrode assembly which is being formed by winding is used as a new first electrode assembly and steps S1-S4 are repeated, batch production of the electrode assembly 12 can be achieved.

By adopting the above solution, when the first electrode assembly is wound by the winding device 10, the misalignment amount of the test tab can be measured in real time, and the adjustment amount of the circumference of the winding needle 101 can be obtained according to the misalignment amount of the test tab. Based on this, when it is found that the first electrode assembly wound by the winding device 10 has the tab misalignment phenomenon, the winding device 10 can adjust the spacing between the first needle body 1011 and the second needle body 1012 according to the adjustment amount of the circumference of the winding needle 101 after completing the winding operation of the first electrode assembly and before starting the winding operation of the second electrode assembly, so as to adjust the circumference of the winding needle 101. Subsequently, the winding device 10 continues winding through the winding needle 101 with the circumference adjusted to form the second electrode assembly, so as to adjust the tab position of the second electrode assembly, thereby reducing the tab misalignment amount or even eliminating the tab misalignment phenomenon. Thus, the situation of tab misalignment of the electrode assembly 12 can be adjusted directly, effectively, conveniently, and quickly, thereby effectively improving the percent of pass of the electrode assembly 12 wound by the winding device 10, effectively reducing the defective rate and scrap rate of the electrode assembly 12 wound by the winding device 10, effectively improving the production efficiency and product quality of mass production of the electrode assembly 12, and effectively reducing the cost of mass production of the electrode assembly 12.

Please refer to FIG. 12, and please refer to FIG. 1, FIG. 2, and FIG. 10 together, in some embodiments of the present application, the step of obtaining the misalignment amount of the test tab includes:
S1.1: Obtaining a value of a test angle at which the winding needle 101 rotates corresponding to the test tab, where the value of the test angle is a value of an angle at which the winding needle 101 rotates from a timing zero point to the time when it is detected that the test tab passes through a tab detection device. It should be noted that the tab detection device (for example, the first detection device 60 provided in the embodiment of the present application) is arranged on a moving path of the test tab. When the test tab passes through the tab detection device, the tab detection device can identify and detect the test tab. Based on this, during the period when the winding device 10 forms the first electrode assembly by winding, each time the tab detection device identifies and detects the test tab, a value of an angle at which the winding needle 101 rotates from the timing zero point to the current moment can be recorded. Each test tab corresponds to a test angle value. The timing zero point may be the moment when the winding needle 101 initially rotates to form the first electrode assembly by winding, or may be other preset moments, which is not limited in this embodiment.
S1.2: Comparing the value of the test angle of the test tab with a value of a corresponding reference angle to obtain an angle difference value of the test tab, where the value of the reference angle is a value of an angle at which the winding needle 101 rotates from the timing zero point to the time when it is detected that a tab at a standard position passes through the tab detection device. It should be noted that when the winding device 10 performs winding to form the electrode assembly 12 without the tab misalignment phenomenon, the value of the test angle of the test ab measured during the winding process is the value of the reference angle. This value of the reference angle is recorded and retained as a reference for determining whether there is tab misalignment. Based on this, by comparing the value of the test angle of the test tab with the value of the reference angle corresponding to the test tab, it can be determined whether the test tab has a misalignment phenomenon. The angle difference value between the value of the test angle and the value of the reference angle can be used to calculate the misalignment amount of the test tab.
S1.3: Obtaining the misalignment amount of the test tab according to the angle difference value.

By adopting the above solution, during the period when the winding device 10 forms the first electrode assembly by winding, each time the tab detection device identifies and detects the test tab, a value of an angle at which the winding needle 101 rotates from the timing zero point to the current moment can be recorded as the value of the test angle, so as to obtain the misalignment amount of the test tab according to the angle difference value between the value of the test angle and the value of the reference angle. Thus, the misalignment amount of the test tab can be obtained directly, effectively, conveniently, and quickly, thereby facilitating the winding needle 101 to adjust the circumference subsequently according to the misalignment amount.

Please refer to FIG. 12, and please refer to FIG. 1 and FIG. 2 together, in some embodiments of the present application, in the step of obtaining the misalignment amount of the test tab according to the angle difference value, first a ratio of the angle difference value to 360° is obtained according to the angle difference value corresponding to the test tab, and then the ratio is multiplied by a circumference of a circle layer where the test tab is located to obtain the misalignment amount corresponding to the test tab.

It should be noted that, assuming that the test tab is the tab of the nth circle from the inside to the outside of the electrode assembly 12, the value of the test angle of the test electrode tab is θₙ₁, the value of the corresponding reference angle is θₙ₂, an interlayer thickness of the electrode assembly 12 is T, a circumference of the winding needle 101 is C, and a radius of the winding needle 101 is r.

Based on this, the angle difference value corresponding to the test tab is the value of the test angle of the test tab minus the value of the corresponding reference angle, that is, θₙ₁-θₙ₂. The ratio of the angle difference value to 360° is (θₙ₁-θₙ₂)/360°.

The radius of the circle layer where the test tab is located (i.e., the radius of the nth circle of the electrode assembly 12) is equal to the thickness of the electrode assembly 12 from the 1st circle to the nth circle plus the radius of the winding needle 101, where the thickness of the electrode assembly 12 from the 1st circle to the nth circle is equal to the circle number multiplied by the interlayer thickness of the electrode assembly 12. Therefore, the radius of the circle layer where the test tab is located is nT+r. Correspondingly, the circumference of the circle layer where the test tab is located is 2π(nT+r), namely, 2πT+C.

Based on this, the ratio is multiplied by the circumference of the circle layer where the test tab is located, and the misalignment amount Xₙ=(θₙ₁-θₙ₂)/360°×(2πnT+C) corresponding to the test tab can be obtained.

By adopting the above solution, a direct and quantitative method can be used to accurately measure the corresponding misalignment amount of the test tab based on the angle difference value, so that the winding needle 101 can subsequently adjust the circumference according to the accurately quantified misalignment amount.

Please refer to FIG. 12, and please refer to FIG. 1 and FIG. 2 together, in some embodiments of the present application, in the step of obtaining the adjustment amount of the circumference of the winding needle 101 according to the misalignment amount, the misalignment amount of the test tab is first divided by a circle number of the circle layer where the test tab is located to obtain an average misalignment amount, and then the average misalignment amount is multiplied by an adjustment coefficient to obtain the adjustment amount of the circumference of the winding needle 101.

It should be noted that when the winding needle 101 performs winding operation with an adjusted circumference, the circumference of each circle of the electrode assembly 12 formed by winding will increase or decrease corresponding to the adjustment amount of the circumference of the winding needle 101. Therefore, the misalignment amount Xₙ of the test tab in the nth circle from the inside to the outside of the electrode assembly 12 needs to be divided by the circle number n of the circle layer where the test tab is located to obtain the average misalignment amount (i.e., Xₙ/n), which is the theoretical adjustment amount of the circumference of the winding needle 101.

In order to continuously optimize the adjustment result according to the on-site situation, the average misalignment amount may be multiplied by the adjustment coefficient K to calculate the actual adjustment amount of the circumference of the winding needle 101 (i.e., KXₙ/n). After completing the winding operation of the first electrode assembly and before starting the winding operation of the second electrode assembly, the winding needle 101 can adjust the circumference according to the actual adjustment amount, and then continue winding to form the second electrode assembly. Subsequently, according to the tab misalignment amount of the second electrode assembly, and by increasing or decreasing the value of the adjustment coefficient, the circumference of the winding needle 101 continues to be adjusted. By repeating this cycle, the adjustment result can be continuously optimized and the tab misalignment can be gradually reduced. Optionally, a value range of the adjustment coefficient K can be 0.2-1.

By adopting the above solution, a direct, effective, and quantifiable method can be adopted, so that the adjustment result can be continuously optimized according to the on-site condition. Based on the misalignment amount of the test tab, the adjustment amount of the circumference of the winding needle 101 can be obtained, so that the winding needle 101 can subsequently adjust the circumference according to the calculated adjustment amount, and it is also convenient to continue to optimize the adjustment of the circumference of the winding needle 101 according to the situation of tab misalignment of the electrode assembly 12 formed by winding of the adjusted winding needle 101, so as to gradually reduce the situation of tab misalignment.

The above description is merely alternative examples of the present application and is not intended to limit the present application. For those skilled in the art, the present application may have various modifications and changes. Any modifications, equivalent substitutions, improvements, etc. made within the spirit and principles of the present application shall fall into the scope of the claims of the present application.

## Claims

1. A winding device, wherein the winding device comprises:
a winding needle, comprising a first needle body and a second needle body which are parallel to each other and have an adjustable spacing therebetween, wherein the winding needle has a first end and a second end opposite to each other, the first needle body and the second needle body jointly form a first hole at the first end, at least part of the first hole is a first adjusting hole section, and a radial dimension of the first adjusting hole section is gradually reduced in a direction close to the second end; and
a first push rod, inserted into the first hole and capable of reciprocating in an axial direction of the winding needle, wherein the first push rod has a first adjusting section matched with the first adjusting hole section.

2. The winding device according to claim 1, wherein a width of the first adjusting section is gradually reduced in the direction close to the second end.

3. The winding device according to claim 1, wherein the winding device further comprises:
a first bracket, arranged at the first end and tightly mounted on a side of the first needle body facing away from the second needle body; and
a second bracket, arranged at the first end and tightly mounted on a side of the second needle body facing away from the first needle body.

4. The winding device according to claim 3, wherein the winding device further comprises a first supporting seat, and the first supporting seat is arranged at the first end and arranged on a periphery of the first bracket and the second bracket in a sleeving mode; and
the winding device further comprises a first elastic member mounted between the first supporting seat and the first bracket, and/or a second elastic member mounted between the first supporting seat and the second bracket.

5. The winding device according to any one of claims 1 to 4, wherein the winding device further comprises:
a first driver, connected to an end of the first push rod away from the winding needle and configured to drive the first push rod to reciprocate in the axial direction of the winding needle.

6. The winding device according to any one of claims 1 to 5, wherein the first hole comprises a first penetrating hole section, the first adjusting hole section, and a first accommodating hole section which are sequentially connected in the direction close to the second end; and
the first push rod has a first main body section and the first adjusting section arranged at an end of the first main body section, and part of the first main body section is arranged in the first penetrating hole section in a penetrating mode.

7. The winding device according to any one of claims 1 to 6, wherein the first adjusting section is a wedge-shaped structure, the first adjusting hole section is a wedge-shaped hole, and the first adjusting section and the first adjusting hole section are matched in a wedge shape.

8. The winding device according to any one of claims 1 to 6, wherein the first needle body and the second needle body jointly form a second hole at the second end, at least part of the second hole is a second adjusting hole section, and a radial dimension of the second adjusting hole section is gradually reduced in a direction close to the first end; and the winding device further comprises:
a second push rod, inserted into the second hole and capable of reciprocating in the axial direction of the winding needle, wherein the second push rod has a second adjusting section matched with the second adjusting hole section.

9. The winding device according to claim 8, wherein a width of the second adjusting section is gradually reduced in the direction close to the first end.

10. The winding device according to claim 8, wherein the winding device further comprises:
a second supporting seat, the second supporting seat being provided with a third hole in a side close to the winding needle, wherein a fourth through hole is formed in a bottom of the third hole, the second end of the winding needle is inserted into the third hole, and the second push rod is arranged in the fourth hole in a penetrating mode.

11. The winding device according to claim 10, wherein the winding device further comprises:
a third elastic member, mounted in the third hole and arranged on a periphery of the second end of the winding needle in a sleeving mode.

12. The winding device according to any one of claims 8 to 11, wherein the winding device further comprises:
a second driver, connected to an end of the second push rod away from the winding needle and configured to drive the second push rod to reciprocate in the axial direction of the winding needle.

13. The winding device according to any one of claims 8 to 12, wherein the second hole comprises a second penetrating hole section, the second adjusting hole section, and a second accommodating hole section which are sequentially connected in the direction close to the first end; and
the second push rod has a second main body section and the second adjusting section arranged at an end of the second main body section, and part of the second main body section is arranged in the second penetrating hole section in a penetrating mode.

14. The winding device according to any one of claims 8 to 13, wherein the second adjusting section is a wedge-shaped structure, the second adjusting hole section is a wedge-shaped hole, and the second adjusting section and the second adjusting hole section are matched in a wedge shape.

15. A winding system, comprising the winding device according to any one of claims 1 to 14.

16. The winding system according to claim 15, wherein the winding system is configured to wind a first electrode plate, a separator, and a second electrode plate to form an electrode assembly, and the winding system further comprises a first detection device, configured to detect tabs of the first electrode plate and/or the second electrode plate.

17. A winding method, wherein the winding method is implemented by the winding device according to any one of claims 1 to 12, and the winding method comprises the following steps:
winding a first positive electrode plate, a first separator, and a first negative electrode plate by the winding device to form a first electrode assembly, and obtaining a misalignment amount of a test tab, wherein the test tab is at least part of a tab on the first positive electrode plate and/or the first negative electrode plate;
obtaining an adjustment amount of a circumference of the winding needle according to the misalignment amount;
adjusting a spacing between the first needle body and the second needle body according to the adjustment amount; and
winding a second positive electrode plate, a second separator, and a second negative electrode plate by the winding device with the spacing adjusted to form a second electrode assembly.

18. The winding method according to claim 17, wherein the step of obtaining a misalignment amount of a test tab comprises:
obtaining a value of a test angle at which the winding needle rotates corresponding to the test tab, wherein the value of the test angle is a value of an angle at which the winding needle rotates from a timing zero point to the time when it is detected that the test tab passes through a tab detection device;
comparing the value of the test angle of the test tab with a value of a corresponding reference angle to obtain an angle difference value of the test tab, wherein the value of the reference angle is a value of an angle at which the winding needle rotates from the timing zero point to the time when it is detected that a tab at a standard position passes through the tab detection device; and
obtaining the misalignment amount of the test tab according to the angle difference value.

19. The winding method according to claim 18, wherein in the step of obtaining the misalignment amount of the test tab according to the angle difference value, first a ratio of the angle difference value to 360° is obtained according to the angle difference value corresponding to the test tab, and then the ratio is multiplied by a circumference of a circle layer where the test tab is located to obtain the misalignment amount corresponding to the test tab.

20. The winding method according to claim 17, wherein in the step of obtaining an adjustment amount of a circumference of the winding needle according to the misalignment amount, the misalignment amount of the test tab is first divided by a circle number of the circle layer where the test tab is located to obtain an average misalignment amount, and then the average misalignment amount is multiplied by an adjustment coefficient to obtain the adjustment amount of the circumference of the winding needle.
